# EUROPEAN PATENT APPLICATION

(11) **EP 1 615 124 A1**
(43) Date of publication of application: **11.01.2006**
(21) Application number: 04291715.3
(22) Date of filing: 07.07.2004
(51) Int. Cl.: G06F 9/44, G10L 15/22

(54) **A method for handling a multi-modal dialog**

(71) Applicant: ALCATEL, 75008 Paris (FR)
(72) Inventor: Hying, Christian, 70184 Stuttgart (DE); Rössler, Horst, 70794 Filderstadt (DE)
(74) Representative: Rausch, Gabriele

(57) **Abstract**

The present invention relates to method for providing a multi-modal dialog on a device comprising the steps of providing a description of a multi-modal dialog; exploring modality capabilities of the device to identify available modalities; establishing a modality binding between the available modalities and the multi-modal dialog; processing interactively dialog parts of the multi-modal dialog according to the modality binding and the description of the multi-modal dialog; and in addition creating and maintaining dynamically a dialog context reflecting used utterances and constraints from an application or usage context and the available modalities; and adapting dynamically the modality binding between the available modalities and the description of the multi-modal dialog according to the dialog context.

The present invention also relates to a corresponding device a dialog generation system and a computer software product.

## Description

The present invention relates to method for providing a multi-modal dialog on a device. The present invention also relates to a corresponding device a dialog generation system and a computer software product.

Web browsing contents describes in a markup language like HTML (hyper text markup language) using a browser is a globally spread technique at present. HTML is a markup language used to display contents. HTML has a mechanism called "form", and can comprise GUI (graphical user interface) parts such as buttons, text boxes, and the like. With such language and a CGI (common gateway interface), a Java Servlet or the like mechanism of a Web server, not only the contents are browsed, but also information can be interactively exchanged between a Web server and a client. The Web server can execute an arbitrary program (application) on the basis of this information, and the server can send back the result in an HTML format to the client. In this sense a browser provides an interactive user interface.

This mechanism can be applied not only to Web browsing but also to any device control. More specifically, a device to be controlled mounts a Web server like means, and sends an HTML like file that contains a form consisting of GUI parts used to control itself to a control device as a client in response to a request from that control device. The control device displays this HTML like file on a browser, and the user operates a GUI on the control device. The control device sends user's input to the device to be controlled (e.g., Web server). In the device to be controlled, a CGI or a Java Servlet mechanism or the like passes this input to a control program to attain control corresponding to the input.

On the other hand, in recent years, information device forms have diversified like portable terminals such as a PDA (personal digital assistant), mobile phone, car navigation system, and the like, and such devices other than a PC (personal computer) can establish connection to the Internet. Accordingly, a markup language such as WML (website meta language) or the like, that replaces HTML, has been developed and standardized. Also, along with the development of the speech recognition/synthesis technique and that of the computer telephony integration technique, access to Web can be made by a speech input via a phone, and a markup language such as VoiceXML or the like has been developed and standardized accordingly. In this manner, markup languages that match the device forms have been developed and standardized.

In addition to diversification of the device forms, UI (user interface) modalities have also diversified (e.g., a GUI for a PC and PDA, speech and DTMF (dual tone multiple frequency) for a phone, and so forth) . A multi-modal user interface improves the operability by efficiently combining such diversified modalities. A description of the multi-modal user interface requires at least a dialog description (that indicates correspondence between user's inputs and outputs, and a sequence of such inputs and outputs), and a modality description (that indicates UI parts to attain such inputs/outputs). There is an activity concerning multi-modal interaction framework at the W3C (world wide web consortium), see e.g. http://www.w3.org/TR/mmi-framework/ standardizing a multimodal environment for the Internet.

The modality description largely depends on the client form. Versatile devices such as a PC and the like have many GUIs, and some recent devices comprise a speech UI due to development of the speech recognition/synthesis technique. On the other hand, a mobile phone most suitably uses speech. This is because the mobile phone supports simple GUI parts on a small liquid crystal screen, but such GUI parts are not easy to use since no pointing device is available. In consideration of device control, a remote controller is used as a control device. It is a common practice to operate the remote controller using physical buttons.

A dialog description might clearly specify a description of modality input/output form (e.g., a given input uses a GUI button, and a given output uses speech).

On the other hand a dialog and modality descriptions might be separated, and the dialog description is given in a modality-independent form. The dialog description as an operation sequence of a given device to be controlled is given in a modality-independent form, and modality descriptions are given in correspondence with various clients independently of the dialog description, thus allowing various clients to operate one device to be controlled.

An XML markup language like representation might give a dialog description itself in a modality-independent form, and has no scheme for giving the modality description and its control description. A dialog description part is converted into an existing markup language such as HTML, WML, VoiceXML, or the like to generate a (understandable) modality description. Or upon directly executing the XML markup language by an enhanced browser, specifying those modalities of a device on which the browser runs, that are known by the browser, and correspondence between the modalities and input/output elements in the dialog description is determined by the browser. That means a browser is treated as a generic multi-modal UI handling any kind of multi-modal dialogs.

In a future No-PC era, it is expected that every kinds of devices have CPUs and communication functions and link up with each other via a network to improve the user's convenience. It is effective for implementation of such device operation environment to use the Web mechanism based on the markup languages.

Furthermore, it is effective for implementation of the device operation environment independent of the types and locations of devices to use a markup language that allows a modality-independent description.

As described above the existing markup languages are modality-dependent languages that assume certain control device forms. For this reason, a device to be controlled must be prepared for a plurality of kinds of markup languages in correspondence with the assumed control devices so as to allow control from various kinds of devices. Specialized presentation languages like HTML, WML, VoiceXML are not suitable for implementing a multi-modal user interface since they do not assume operations as combinations of a plurality of modalities.

A modality-independent markup language suitable for implementing a multimodal user interface by converting it into the existing markup languages such as HTML, WML, VoiceXML, or the like, dependent on the device capabilities is disclosed by the United States Patent Application Publication No. 2003/0158898 A1.

There modality information associated with modalities of a control device is received via a communication module. Also, dialog information associated with dialog of a device to be controlled is received via the communication module. A bind layer inference module generates bind information that infers the relationship between the modality information and dialog information, and binds the modality information and dialog information. The bind information and dialog information are transmitted to the control device via the communication module.

A remaining problem is to involve usage behaviour and usage context in order to improve communication efficiency thus improving ergonomic aspects of a user interface, i.e. an dynamic adaptation of applicable modalities to the context of a dialog.

A dialogue is considered as a conversation between at least two parties, intended to produce a common understanding of an agreement between the parties.

Utterance in this context is treated as the use of uttered modality especially sounds for (auditory) communication communicated, e.g. frequently uttered sentiments.

Especially it is a problem to create an multimodal dialogue which provides integration and synchronization of speech dialogue and graphical dialogue by means of dialogue-rules and context based generation of composed multi-modal dialogue elements.

The improved communication will be reached by adaptive dialog forms and modalities within a human-machine conversation interface.

This problem is solved by a method for handling a multi-modal dialog on a device comprising the following steps: providing a description of a multi-modal dialog; exploring modality capabilities of the device to identify available modalities; establishing a modality binding between the available modalities and the description of the multi-modal dialog; and processing interactively dialog steps of the multi-modal dialog according to the modality binding and the description of the multi-modal dialog; as well as instantaneously creating and maintaining dynamically a dialog context reflecting used utterances and constraints from a situational application or usage context and the available modalities; and adapting dynamically the modality binding between the available modalities and the description of the multi-modal dialog according to the dialog context.

The problem is solved inter alia by a device with a dialog interface, a dialog generation system, and a computer software product.

In other words: applicable modalities within a dialog are rendered context sensitive based on user's utterances. A system for a multimodal such a might comprise a dialogue generation component to build up, update and use a representation of the main elements of the contents of the utterances made by the user and by the system; to plan system reactions as a reply to user utterances; and to keep track of constraints from the situational context (capabilities of the devices used, user preferences, etc.), as they are provided by a context manager, in order to decide about possible modalities of the system output.

The dialogue generation system might comprise an information state (IS), that is a representation of the current state of the task, as well as of the state of the dialogue comprising information about open communicative obligations (e.g. open yes/no-questions) and information about the options which the system offers to the user to proceed. It might also comprise an input integration (II) component that receives representations of the contents of the user utterances as an input and integrates them with the information state by an update operation. An action planner (AP) might work on the updated IS representations. It contains rules for possible sequences of dialogue steps (a "dialogue grammar"), and it decides, on the basis of a given IS, which actions, i.e. dialogue steps to perform.

Two kinds of dialogue step rules are distinguished: general dialogue step rules define application independent behavior, application dialogue step rules define application dependent behavior.

The AP interacts with an application database, since it needs to provide application-specific data. The AP updates the IS and produces abstract representations of the system reactions, in the form of multi-modal dialogue elements combining appropriate graphical interaction elements with voice dialog elements.

An output manager (OM) receives input from the AP. To decide about the modalities to be used for the system utterance to be produced, it keeps track of features coding context constraints. It produces an abstract XML-coded representation of the system utterance, e.g. combined multi-modal dialogue elements. It communicates back to the IS module the decisions about packaging of multi-modal dialogue elements it has made. The output of the OM is under-specified with respect to the details of rendering. A renderer translates the output of the OM into the actual representation format. It determines layout on a screen, the "look and feel", etc. It is specified, however, with respect to the selected modality or modalities of the system utterance and with respect to the amount of information to be uttered ("information packaging").
According to the needs of the devices and the browsers used as front-ends various distinct renders are be plugged into the system.

Accordingly, it is an object and advantage of the present invention to provide a multimodal dialogue generation system comprises a dialogue generation component which performs the following steps
- create a representation of the contents of the used utterances
- plan system reactions
- derive constraints from the situational context
- maintain the representation of the contents
- select modalities of the dialog
in order to provide a flexible multimodal dialogue generation system e.g. a context based dialogue service for mobile devices.

Another advantage of the present invention is the improved ergonomic natural user interface enabling a better machine interaction. It will reduce misunderstandings and support optimal application interaction. Furthermore the task of integrating modality aspects into the application and usage context are avoided.

A further advantage of the present invention is provides a context based dialogue modality suitable to a current (changing) application environment.

Yet another advantage of the present invention is applicable to the hand-held and mobile market attractive feature since the method is completely device independent and the solution provides and advances in functionality and modality independence, and application independence.

These and many other objects and advantages of the present invention will become apparent to those of ordinary skill in the art from a consideration of the drawings and ensuing description.

Those of ordinary skill in the art will realize that the following description of the present invention is illustrative only and is not intended to be in any way limiting. Other embodiments of the invention will readily suggest themselves to such skilled persons from an examination of the within disclosure.

The described system is intended to illustrate the invention in detail by an exemplary prototype (architecture) of a dialogue management for a flexible multimodal dialogue system, with a Java-based implementation for an exemplary application domain like a news information service. The concepts underlying the architecture are intended to support also other applications.

One of the main goals in design of a dialogue manager is genericity and flexibility. Emphasis is laid on a modular design and on a clearly defined hierarchy of abstractions on the level of representations.

In some cases this orientation may seem to lead to the use of more (or more bulky) representations than would be absolutely required for the one application one works on. It is expected that the invention nevertheless support additional flexibility.

The annex shows an illustrative Java coding realizing the method according to the invention. It gives an overview of the inheritance and extension tree of the illustrative coding.

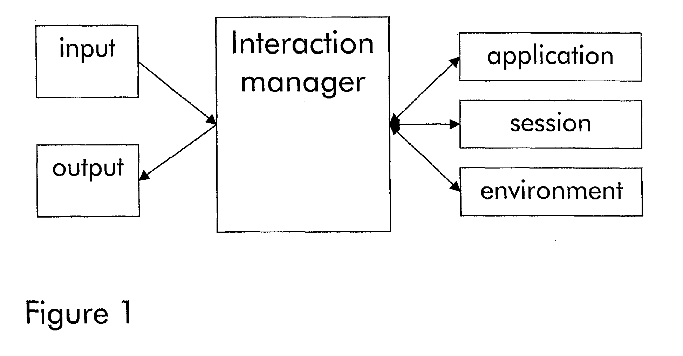

Figure 1 resumes the framework of a dialog. An informal sketch of the system architecture with a lists of its components and a recall of the major tasks of the system is given. The information flow through the system is also given informally. The used representations in the dialogue manager (DM) are described; the focus is on IS, as these are central to the DM components. In addition, a representation of a user utterances, of domain data, as well as of the modules of the dialogue manager are described.

Sketch of the architecture of the dialogue system: The exemplary dialogue system comprise a dialogue management component. This component has the following tasks to build up, update and use a representation of the main elements of the contents of the utterances made by the user and by the system and to plan system reactions as a reply to user utterances. Further it has to keep track of constraints from the situational context (capabilities of the devices used, user preferences, etc.), as they are provided by a (simulated) context manager, in order to decide about possible modalities of the system output.

The **dialogue manager** part 1.d and 1.d itself compromises several modules: an **information state** (IS) part 1.c.c and 1.c.c, an **input integration** component (II) part 1.b.c, an **action planner** (AP) part 1.c.d, an **output manager** (OM) part 1.b.a, and a **renderer.**

The information state is a representation of the current state of the task, as well as of the state of the dialogue comprising information about open communicative obligations (e.g. open yes/no-questions) and information about the options which the system offers to the user to proceed.

It receives representations of the contents of the user utterances as an input and integrates them with the information state by an update operation.

The action planner works on the updated IS representations.
It contains rules part 1.a, and 1.b and 1.b for possible sequences of dialogue steps (a dialogue grammar), and it decides, on the basis of a given IS, which actions (i.e. dialogue steps) to perform. Two kinds of dialogue step rules are distinguished: general dialogue step rules define application independent behavior, application dialogue step rules define application dependent behavior.

The AP interacts with the application database, since it needs to provide application-specific data. The AP updates the IS and produces abstract representations of the system reactions, which are not yet specified as to the modalities in which they can/should be presented.

It receives input from the AP. To decide about the modalities to be used for the system utterance to be produced, it keeps track of features coding context constraints. It produces an abstract XML-coded representation of the system utterance. It communicates back to the IS module the decisions about modality choice and information packaging it has made. The output of the OM is under-specified with respect to the details of rendering.

The renderer translates the output of the OM into the actual representation format. It determines layout on a screen, look and feel, etc. It is specified, however, with respect to the selected modality or modalities of the system utterance and with respect to the amount of information to be uttered ("information packaging").

According to the requirements of the devices and the browsers (used as front-ends) various distinct renderers might be plugged into the system.

The output of the OM is coded in XML. It is given to the Renderer, a separate component of the system, responsible for producing the displayable output of the system. The Renderer receives this abstract XML data and produces e.g. HTML, optional further renders can be used which produce VoiceXML or other representations. The Renderer feeds its output into the user devices; it provides for flexibility with respect to the display layout, look and feel, etc.

Sketch of the information flow in the system: When a dialogue is taking place the following processing steps could be observed.

Grammar: The user input is processed by the front end e.g. a browser. It takes e.g. an L&H grammar referenced by an e.g. XHTML (extensible HTML) document. The grammar might be prepared in such a way as to output strings that can be analyzed as attribute/value-pairs by the II module. It is preferable to have a standard L&H grammar output (in the form of a string of the recognized input). A transformation component might be added, to reformat the grammar output into the attribute/value-pair notation required. This approach may contribute to modularization; firstly, because then any other grammar tool could be used as part of the Browser, without the need for changes; secondly, because the grammar output should in any case be enriched with classifications from the domain and task model. Alternatively, of being able to replace the grammar modules of the overall system, a lexicon component which can take string inputs and enrich them with task/domain-classifications, and which is separate from the actual grammar and lexicon used in the Browser, may be preferable.

Validity check: The attribute/value-pairs produced by the grammar might be checked for validity. The recognizer result may not be usable within the system, because of ASR (automatic speech recognition) errors. If the user utterance is invalid, a message is given directly to the output manager, to instruct it to issue a system utterance inviting the user to repeat (or use another input modality). The number of validity checks performed might counted in a simple history list. Instead of asking the user, in the speech input/output modality, a second time in a row to repeat his utterance an invitation to use another modality may be issued, if the dialogue context allows for this (to be checked in II module), and if other input modalities are available (information present to the GM module).

In case of invalid user input (non-analyzable), the II and AP components are bypassed. Since the OM feeds back to the IS module, however, the information about the need for a repetition (or a sort of "meta-dialogue") is kept in the transaction history. This allows to avoid endless loops of user input, recognition error , repetition request, user input etc.

Input Integration: The valid attribute/value-pairs contained in the user utterance are integrated into the representation of the information state of the system. The integration is performed by means of rules. All information states (or at least the n last ones) are kept in a simple history list. This allows the user at any time to go one step back in the history of dialogue steps carried out with the system.

Action planning: The result of the integration of the user utterance into the current information state is a feature structure (with certain attributes filled by the user input). This feature structure is used by the action planner, to perform the following tasks:
(a) to match the information state representation against general rules for the dialogue steps (a grammar of possible dialogue steps) and to thereby decide about the next steps to be performed by the system;
(b) if necessary to call the application (data collection) and to perform operations on application data.
(c) to provide a generic representation of the next system utterance, in terms of the type of dialogue act to be performed, the topic concerned by the dialogue act, the current task state, new options for system output, etc.

Output management: The AP output is a feature structure, possibly with attached actions; it is the input to the output manager. From the type of dialogue act and the topic, as well as from the output options, the OM produces a set of possible system utterances. In doing so, it keeps track of the constraints provided by the context Manager. These constraints might be features. Examples are: "no speech"; "use big font: user is shortsighted"; "window size is ..."; etc.

As a result, from the theoretically possible output modalities, one is selected, and a system utterance (including canned text plus data from the application), as well as a presentation form (e.g. short or long news text) are selected from the generation lexicon. The OM also provides links to the speech recognition grammars related to the generated system utterance. System utterance and links are coded in XML and handed over to the renderer. In particular it comprises information like application content; system utterance text; modality selection features, or speech recognition grammars. The OM provides an update of the information state back to the IS component.

Rendering: The renderer keeps track of constraints about the details of the layout of a given screen of the user device, as well as of preferences with respect to the look and feel of a service provider. The renderer transforms the incoming XML into format which can be interpreted by the used browser. To communicate with the browser, it produces e.g. XHTML pages, ASR grammars and hand-writing word lists.

The browser: it receives XHTML and ensures that the respective utterances are synthesized by the TTS and/or the respective display is produced on screen. Furthermore it processes the given ASR grammars in order to handle speech input.

The information state is a central representation of the dialogue manager as it is the only input to the AP and it is manipulated by the modules II, AP and OM.

Information states are represented as feature structures part 1.c, 1.c, 1.c, and 1.c containing the following types of information: description of a task state, description of the action requested by the user and carried out by the system; actions correspond to the actions described in the task model, a description of the alternatives which the system suggests to the user as a next step in the dialogue; if necessary, the actual system utterance could be represented explicitly as well, but since it is kept track of in the subsequent update of a given IS (in the form of an update of the task structure), this may be redundant, and description of features to handle yes/no-questions (e.g. "should the bookmark be removed?").

The task state description part 1.c.a.a and 1,c.a.a contains attributes which are themselves elements of a specialization hierarchy part 1.c.a and 1.c.a taken over from the domain model (listed here with the most general on top, by increasing specialization): task type (e.g. category keyword), task name (e.g. for category: politics, economy, sports,...), news-item: the value is an identifier of a news item, thus a pointer to the domain model, and news-component: the value is one of "header, short text, long text, picture (gallery), video".

Task state descriptions are updated with values identified in the user utterances. Since the features are organized according to the specialization hierarchy described above, updates at a given hierarchy level lead to changes at all lower levels. If, for example, the user provides information about a new news item he wants to see, the slot for "news component" (one level lower) is set back to "undefined", even if it was filled with, say, "video', before (but the "video viewing" was only applicable to the previous news item). Consequently, shortcuts in the task model operated by the user can be realized in a simple way. Assume the user has looked at economic news via a keyword and then says "what is there in politics?" This means that he/she wants to go back to a category-wise selection, filling both the "task-type" and "task-name" slots. All other slot values remain undefined.

Updating the IS with the user input is done via update rules in the II module. These rules make use of attribute/value-pairs derived from user utterances.

User utterance representations: A grammar used for ASR typically analyses utterances by deriving one or several words.

Either within the grammar, or in a separate mapping module, the recognizer output is mapped onto the attribute/value-pairs used in the domain and task model. Examples are words used to indicate an action ("select", "display", "show", etc.), to denote a task-type, a task-name, a news item, keyword, news component, etc. The representation of the user utterance uses the same slots as the task state description does.

Representation of domain data: As NewsML is likely more complex than the format needed for the purpose of the dialogue system, another standard, RSS (Rich Syndication Standard; RDF Site Summary) might be used.

The RSS encoding of the news items is done in the example in XML. This XML-coded data are used by the Action Planner and handed on to the Output Manager.

Output of the Action Planner: The content of the AP output has been described above. As the AP gets IS-representations (feature structures) as an input, its output may still (in part) be represented as feature structures. These may however contain pointers to actions.

Note that AP output does preferably not contain any text of system utterances. It only contains features and values pointing to dialogue act types and topics. Only the Output Manager has a lexicon of system utterance templates at its disposal. This may allow to select shorter or longer system utterances, depending on the selected output modality and user preferences.

Output of the Output Manager: The OM produces XML-encoded data. If the OM input is restricted to an abstract level, the OM output, on the contrary, is fully specified with respect to the contents which will be said or displayed. However, still no decisions as to the layout of the messages are taken. The amount of material to go into a system utterance is for simplicity reasons fixed.

A user may at any point in the dialogue carry out one of the following actions, which serve to ease the handling of the system as such:
- URL: http:(/domain.name/directory/subdirectory/page.htm
- go one step back in the history of dialogue steps performed;
- ask the system to say again what it said last (e.g. if noise intervened, or if the screen output needs to be refreshed, for some reason).
- go to the main entry menu, from where the system can be left. The actions allow the user to flexibly steer the system.

Shortcuts through the domain and task model can at most points of the dialogue be used, for example to switch to another action or to another task type. As mentioned above
- changing the action (show available selection options, bookmark, delete bookmark; possibly send a note to someone by e-mail) will not change the task state;
- changing a slot in the task state will change all the slot values hierarchically lower than this slot as well.

Together these two devices allow for flexibility in the navigation within the task model.

Selection of output modalities is made in the OM. It keeps track of the context Manager constraints. Since the contents of a system utterance and the modalities to be used for uttering it are kept separate of each other, the OM combines the two types of information.

This allows to formulate constraints about (in-)felicitous modality use, depending on contents (e.g. "don't use TTS to tell about the user's bank account balance, unless you are in speech-only mode"); it also allows, next to these general rules, a set of specific constraints, e.g. for user preferences, e.g. a given user is short-sighted and needs a large font on his display; a user does not want to hear any TTS (text to speech); etc.

Although illustrative presently preferred embodiments and applications of this invention are shown and described herein, many variations and modifications are possible which remain within the concept, scope, and spirit of the invention, and these variations would become clear to those of skill in the art after perusal of this application.

For example, the invention provides an object oriented architecture of a multimodal adaptive dialog system using feature structures implemented in Java and providing especially uniform application interfaces by reusing common programming structures in order to gather context information for an adaptive and reactive behavior. Alternative techniques and implementation (languages) are obvious.

This implementation has especially the advantage of reusing structures like rules part 1.a. for interface rules part 1.a.a or application rules 1.a.c. Similarly rule containers part 1.b and 1.b are reused for output processor part 1.b.a, application planner part 1.b.b, and input processor part 1.b.c.

### Annex: Class tree of an example implementation

Part 1.a Rule
   Part 1.a.a interfaceOMRule
   Part 1.a.b ApplicationRule
   Part 1.a.c InputRule
Part 1.b RuleContainer
Part 1.b.a OutputProcessor
   Part 1.b.b ApplicationPlanner
   Part 1.b.c InputProcessor
Part 1.c FeatureStructure
   Part 1.c.a HierarchicFeatureStructure
      Part 1.c.a.a TaskState
   Part 1.c.b ApplicationInformation
   Part 1.c.c InformationState
   Part 1.c.d SystemDialogAct
Part 1.d DialogManager
Part 1.e OutputManagerRules
Part 1.f NewsApplication
Part 1.g demo

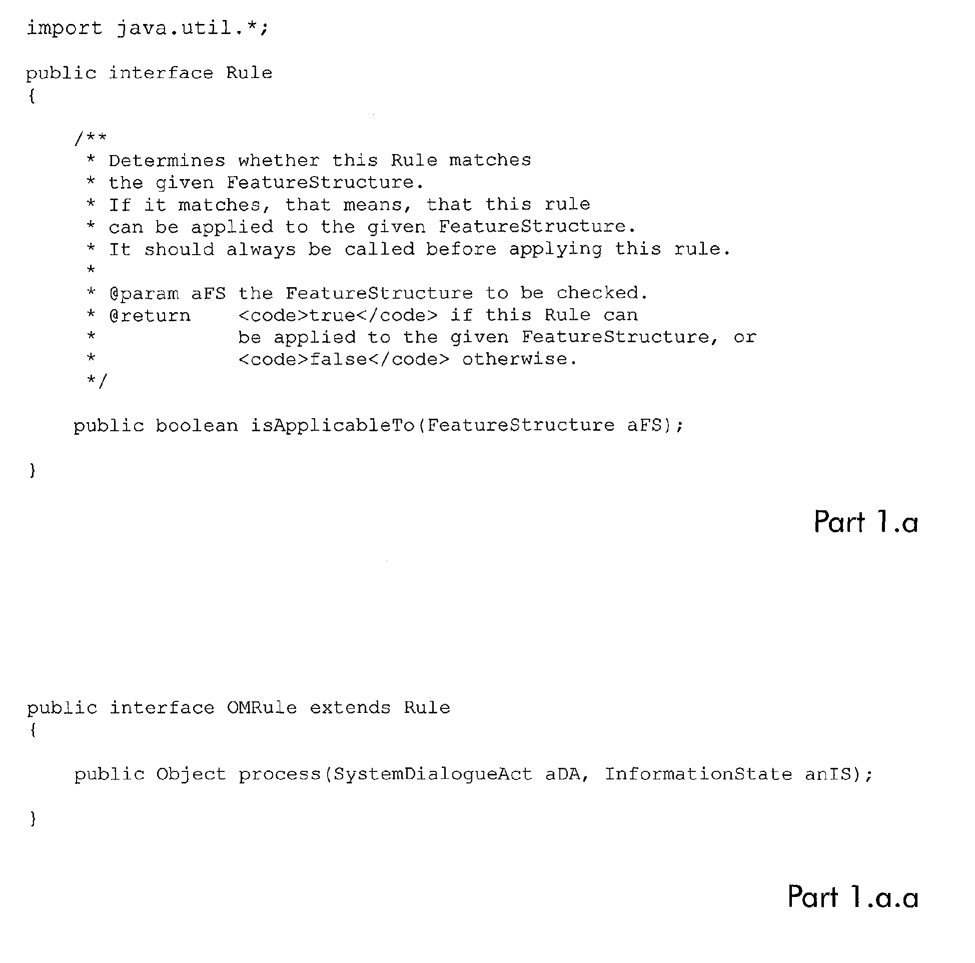

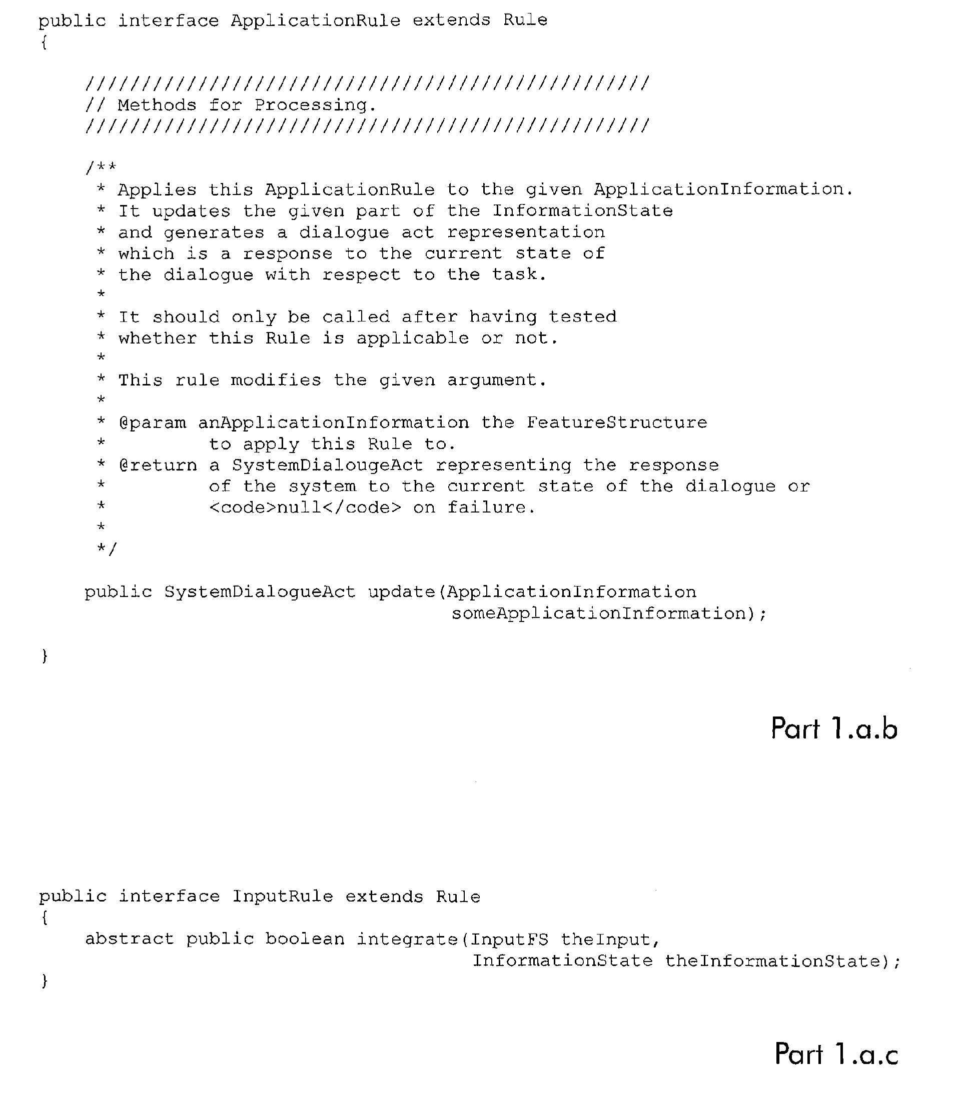

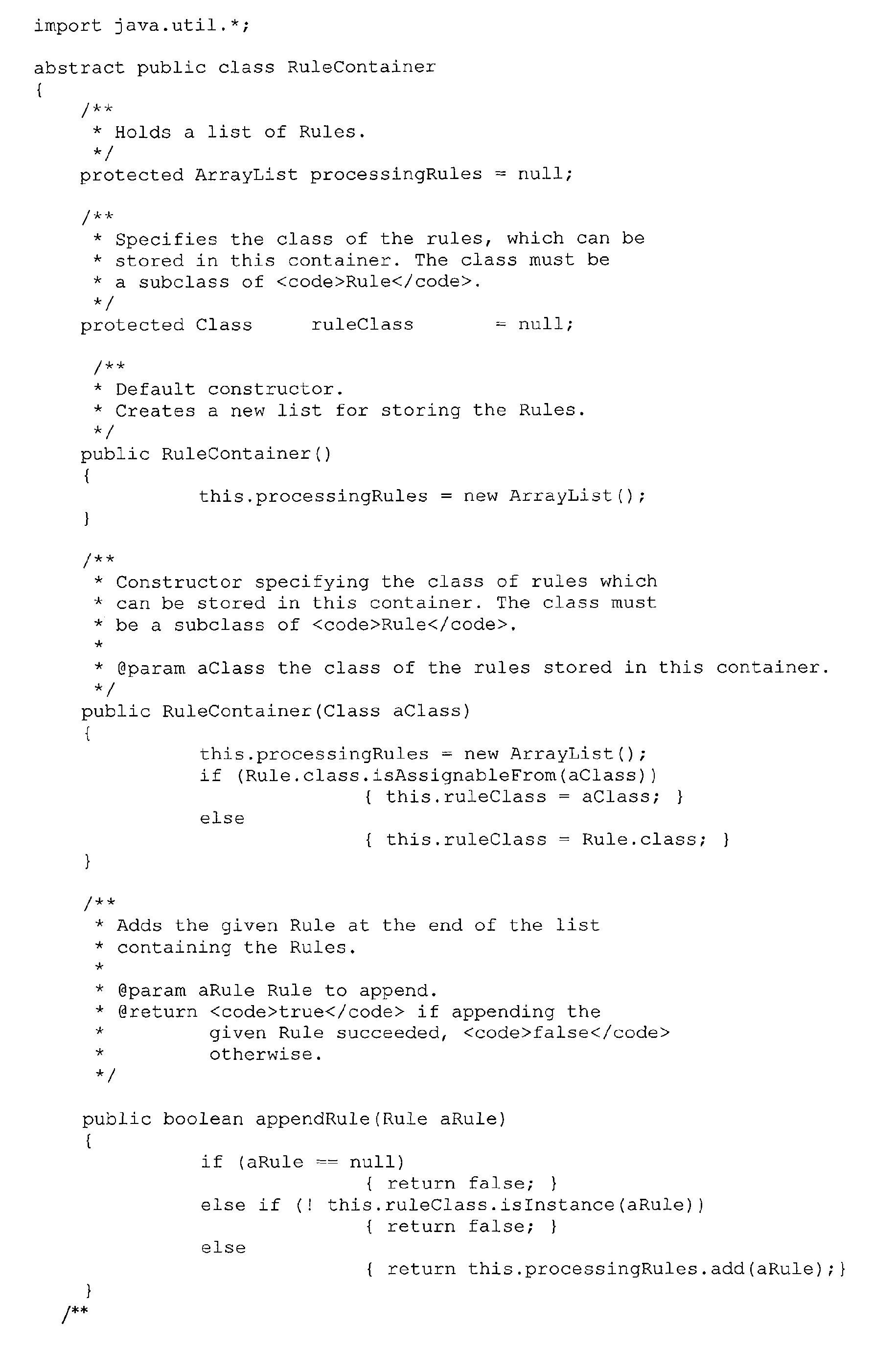

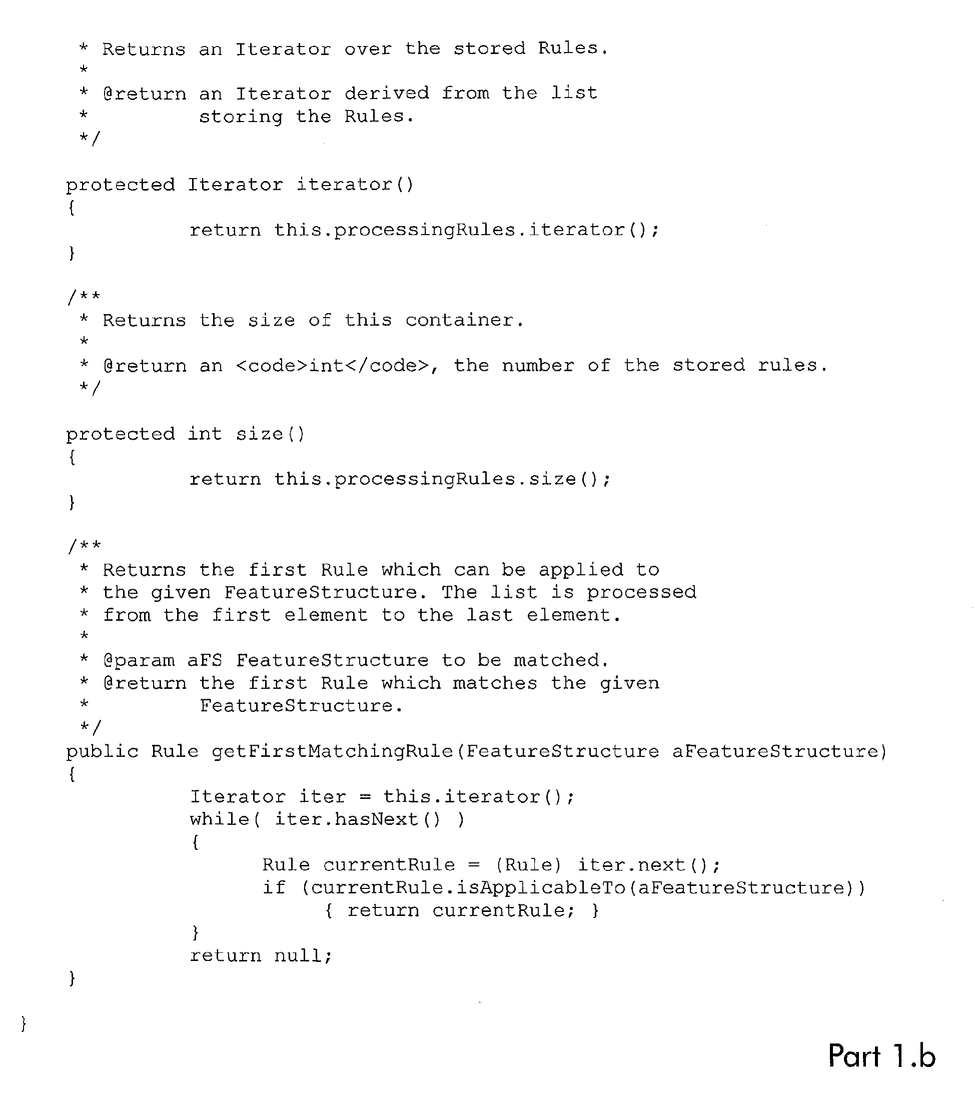

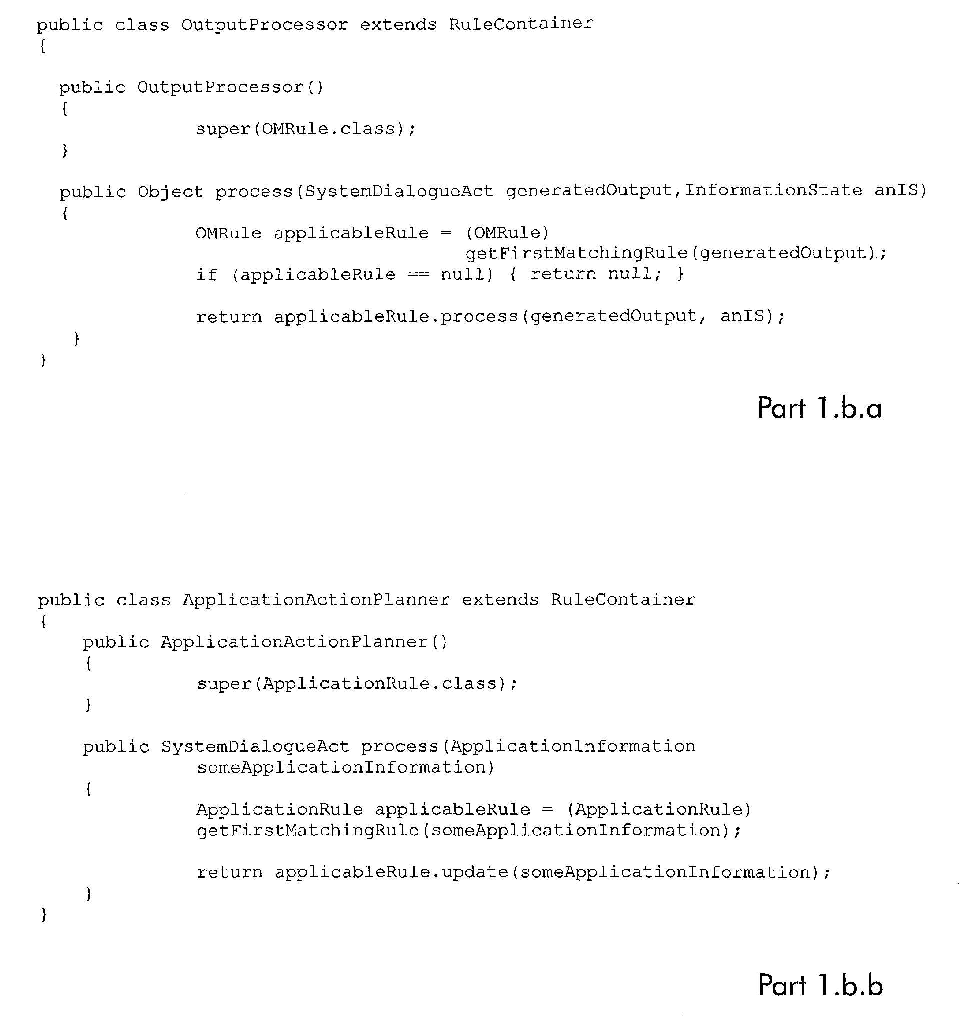

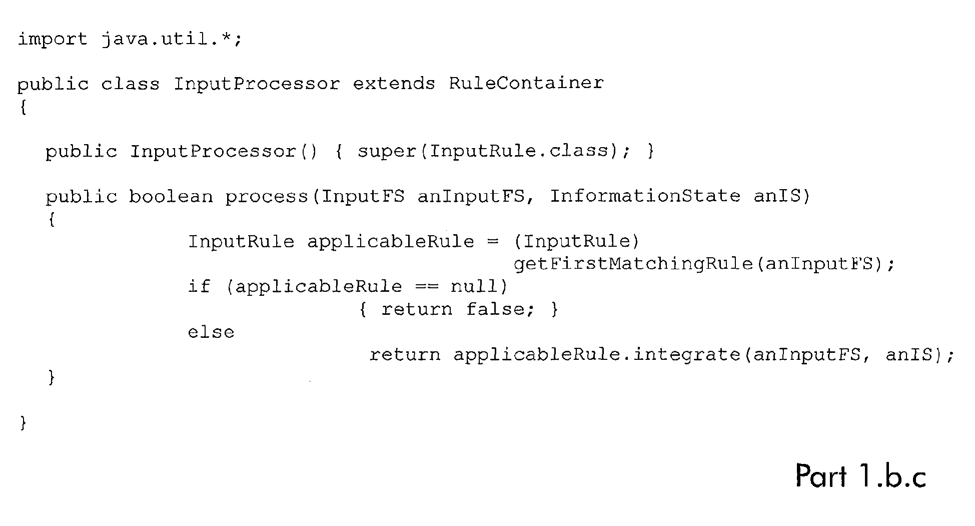

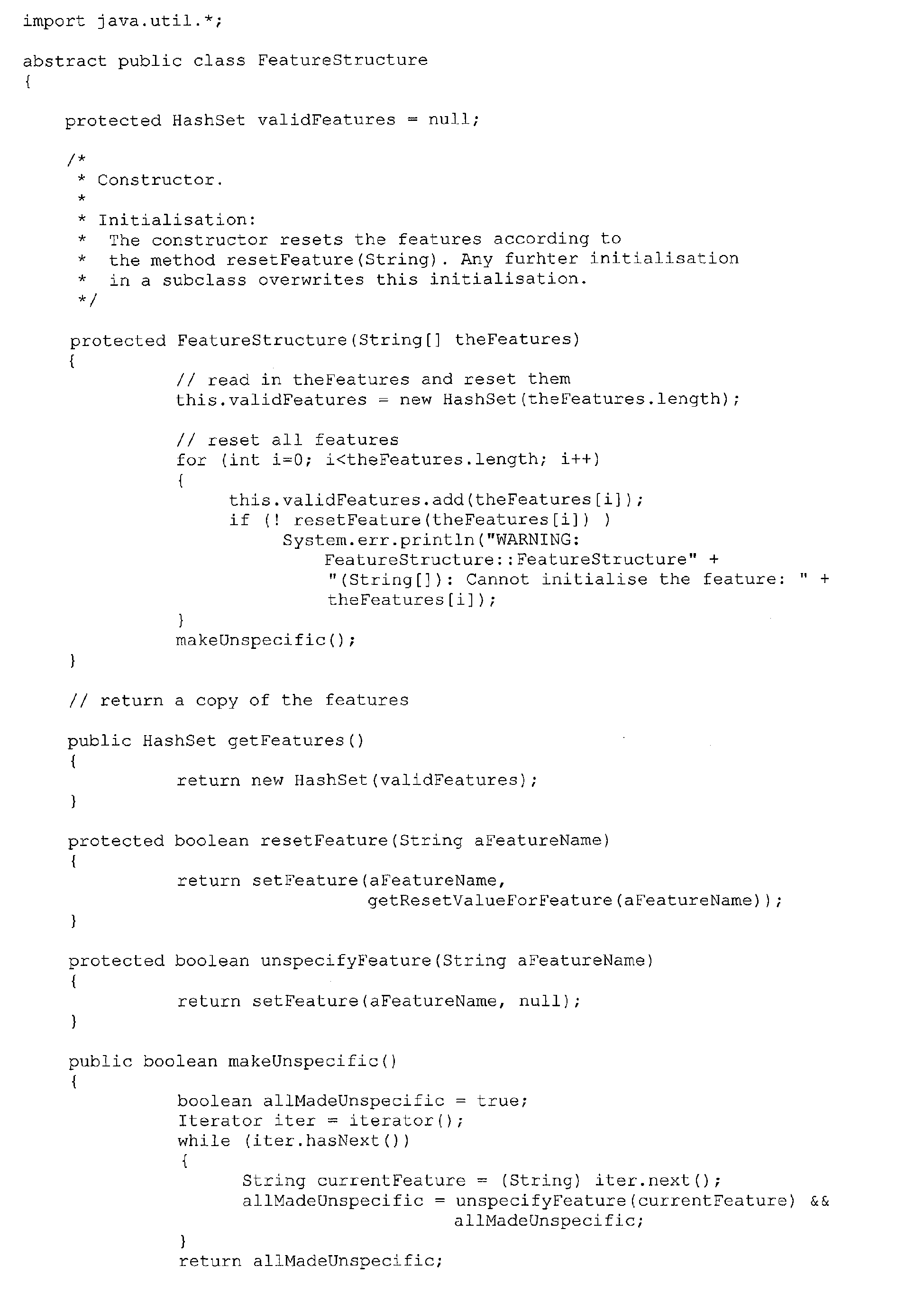

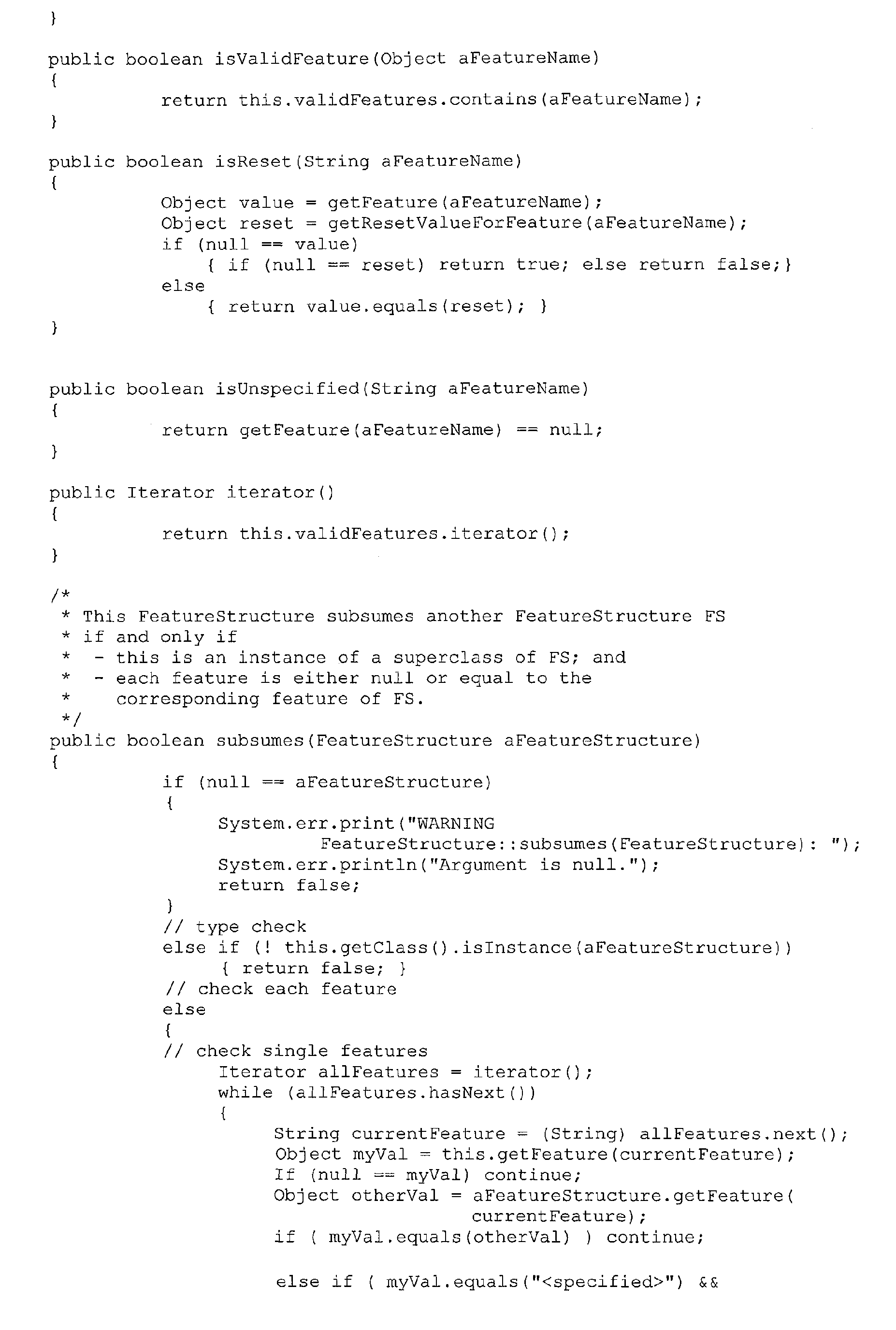

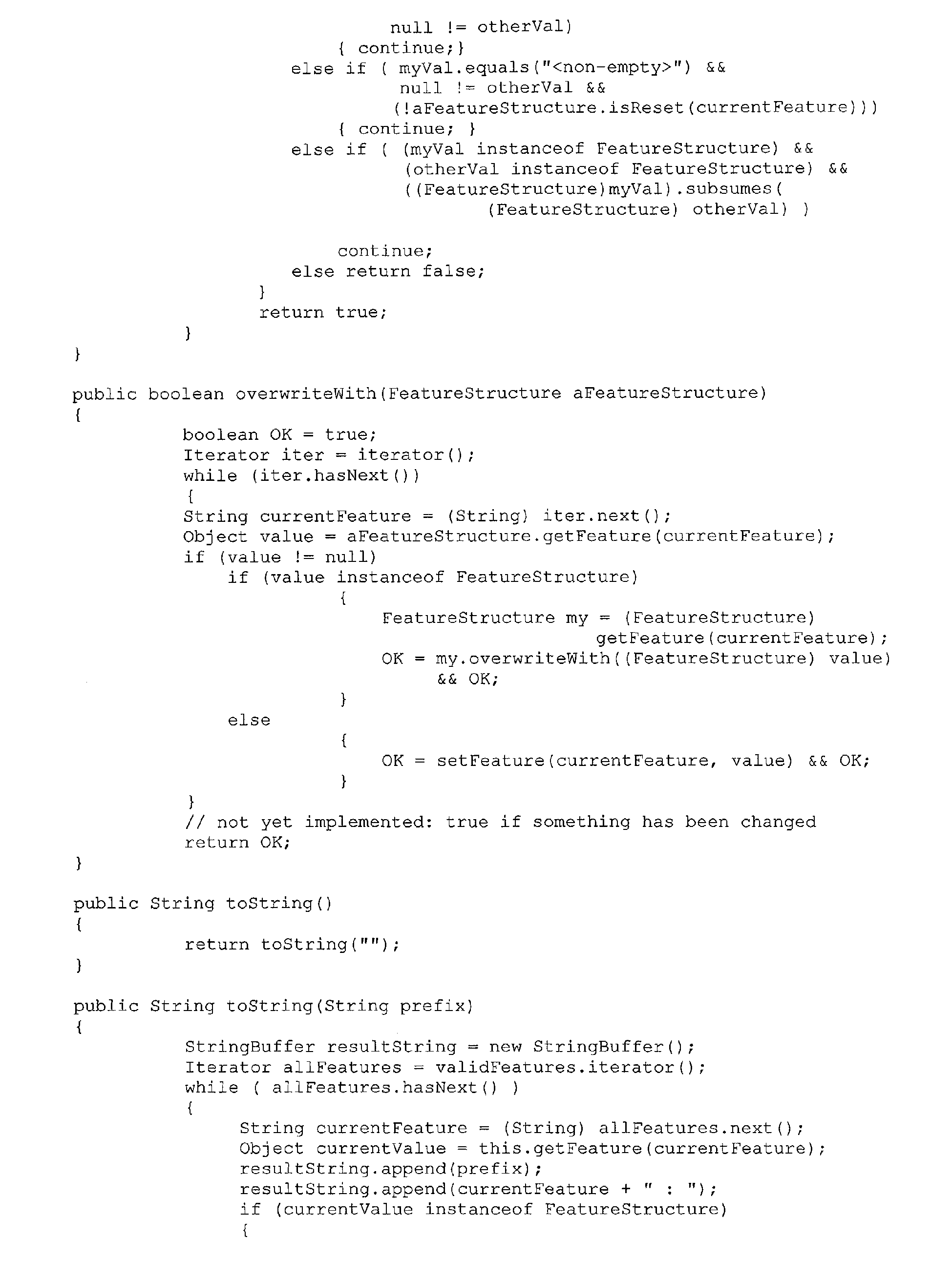

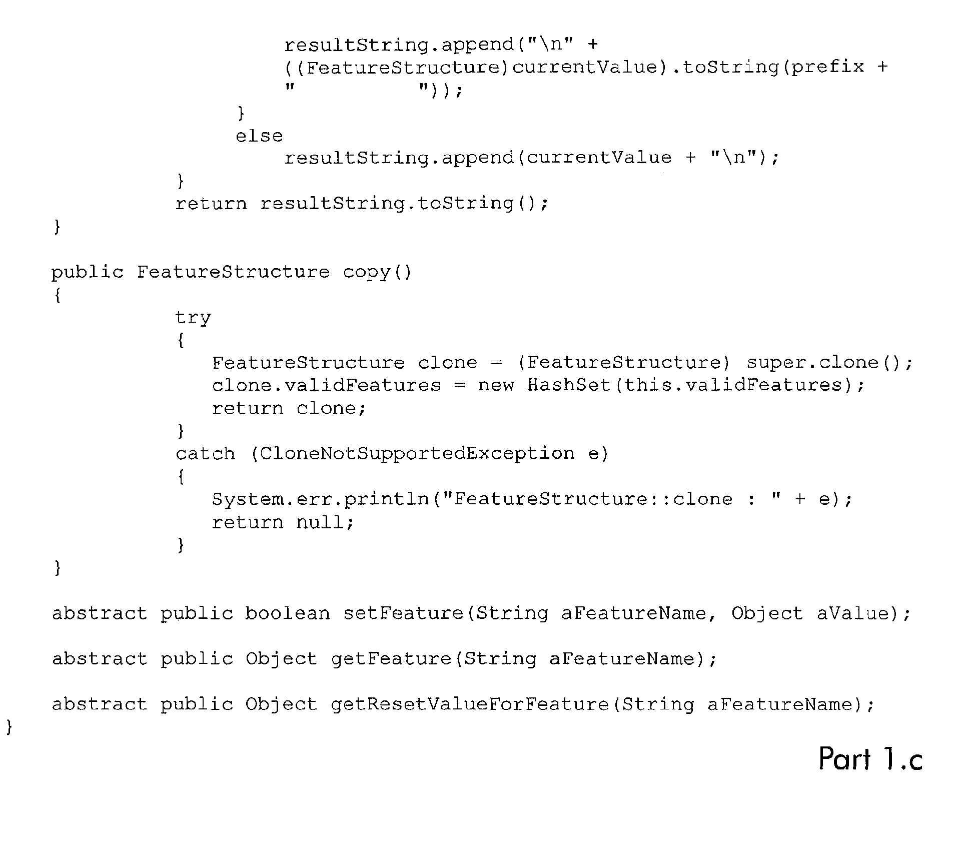

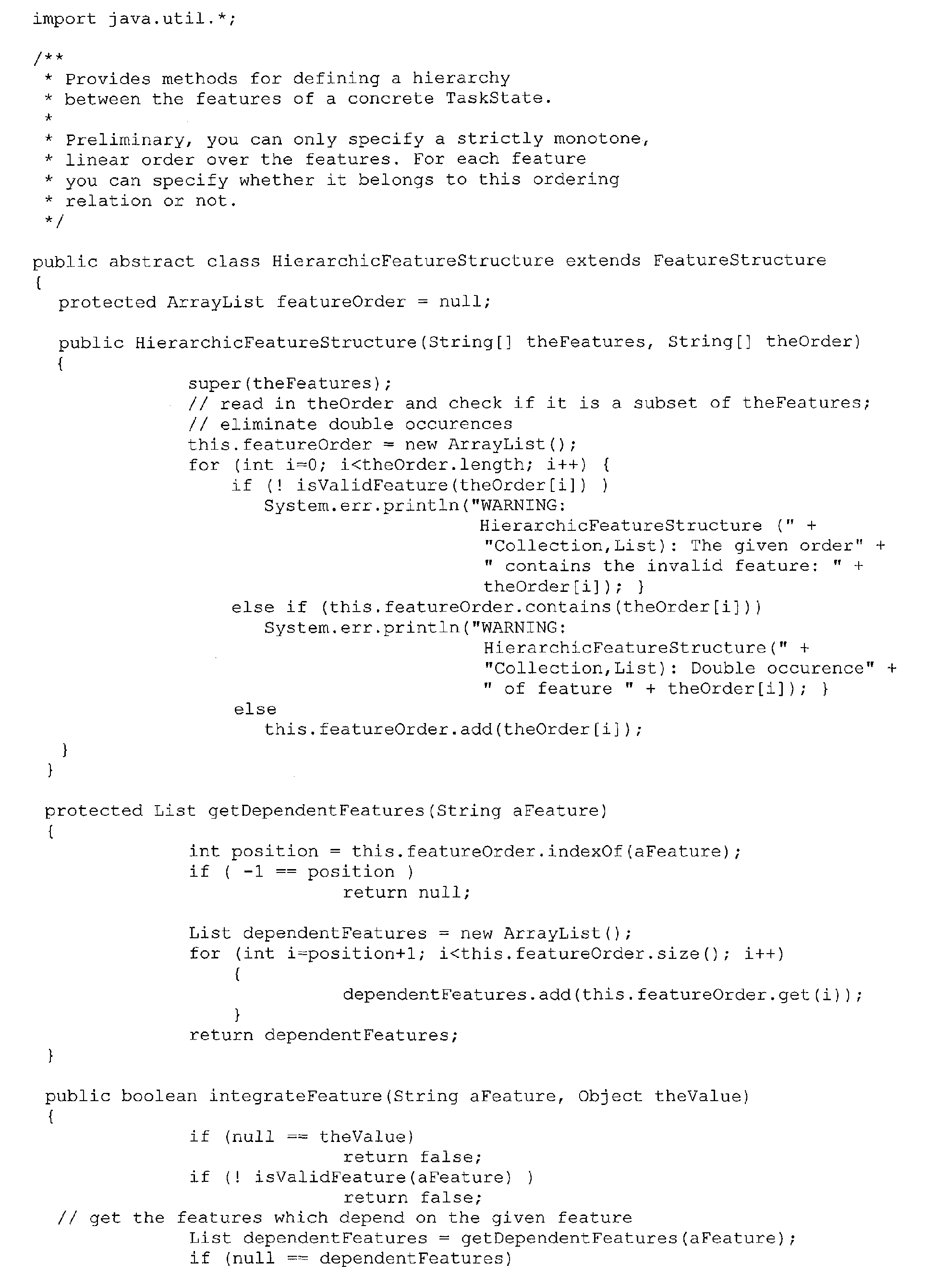

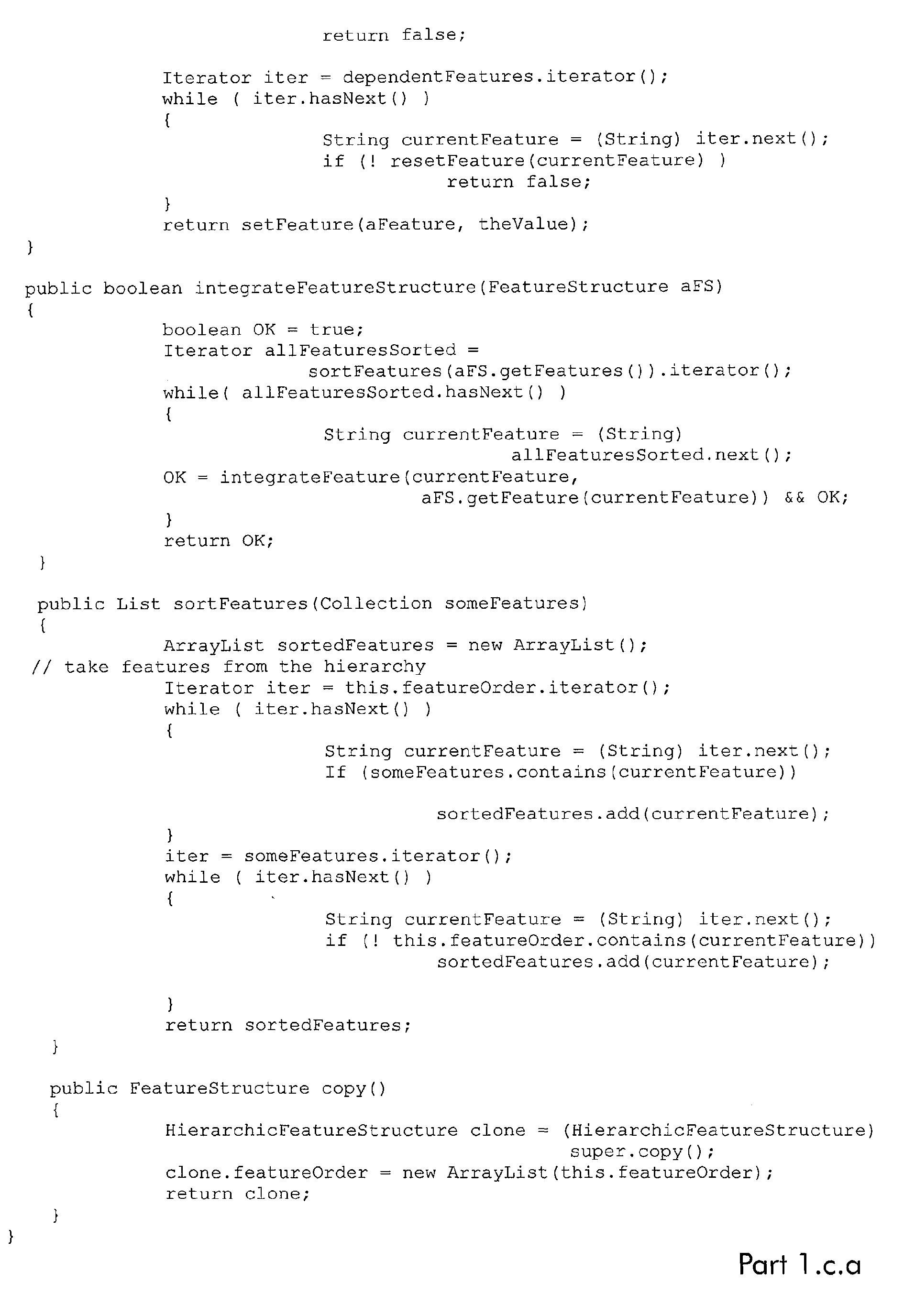

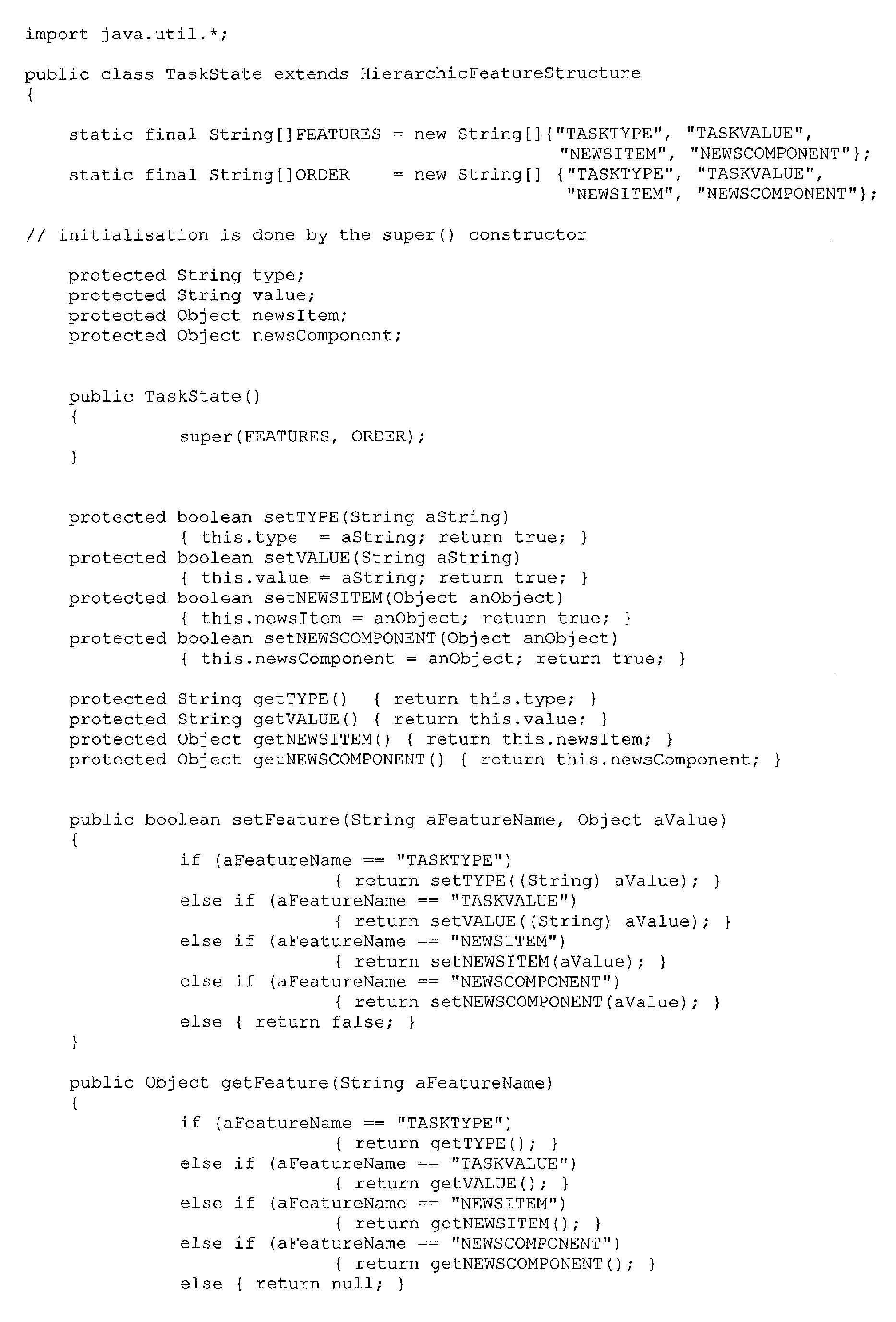

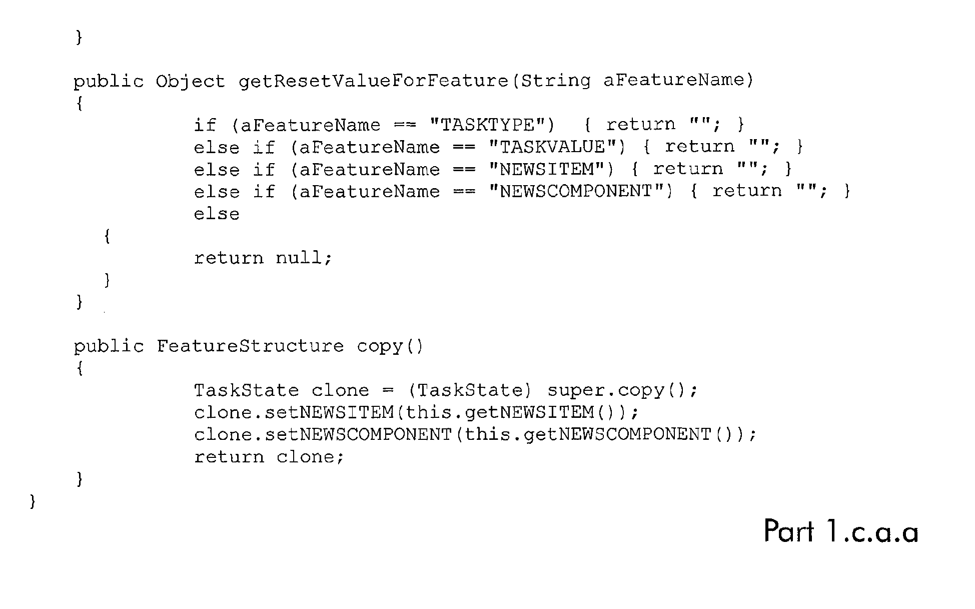

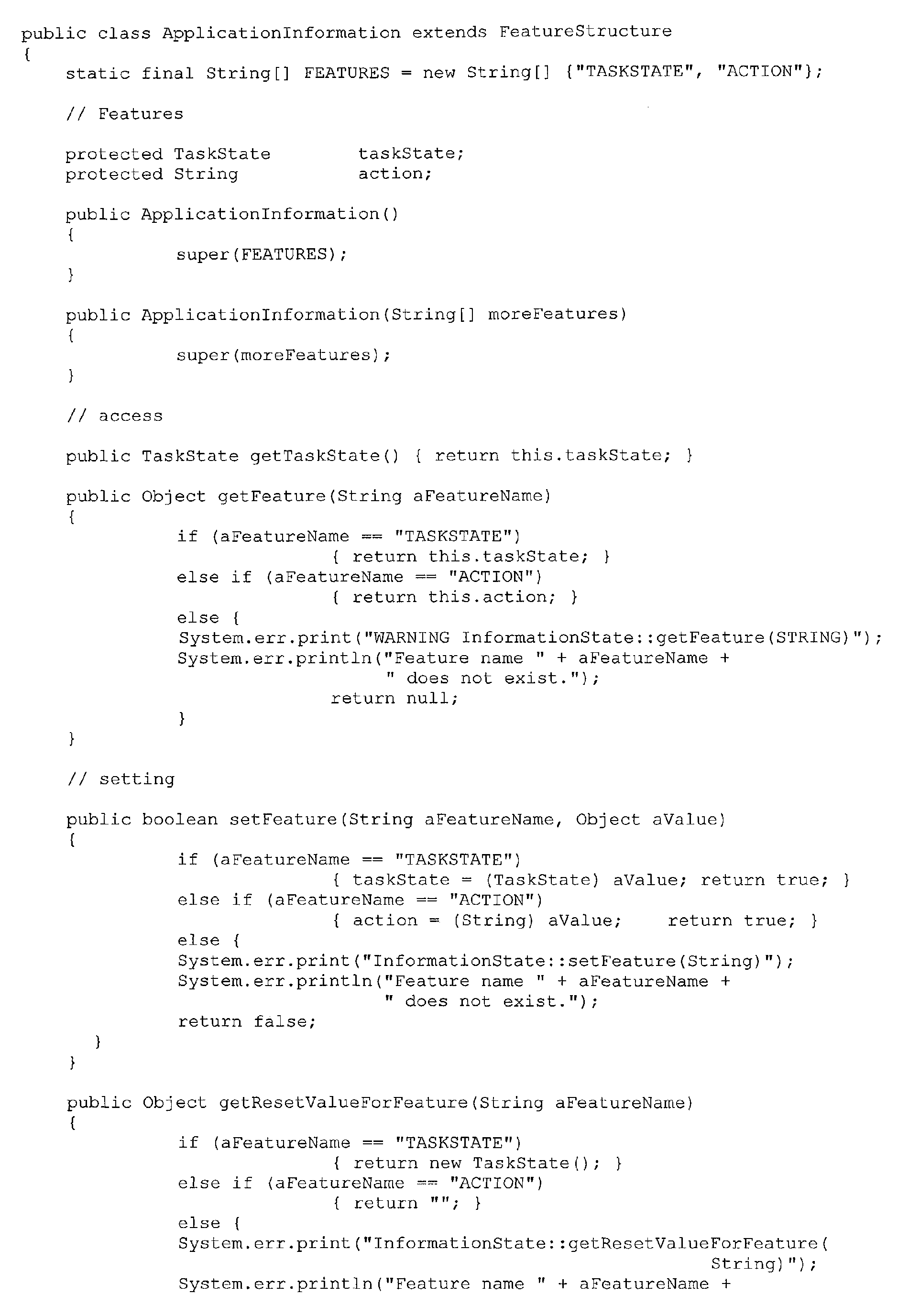

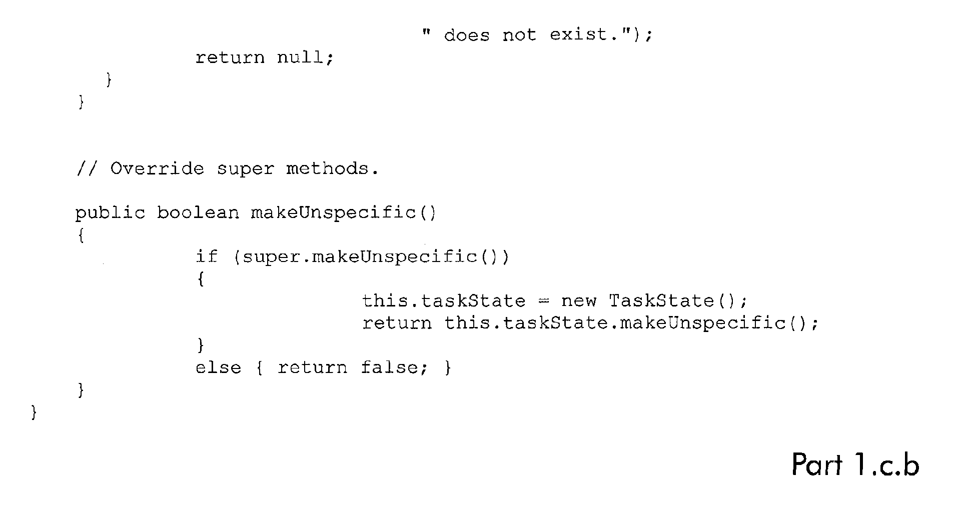

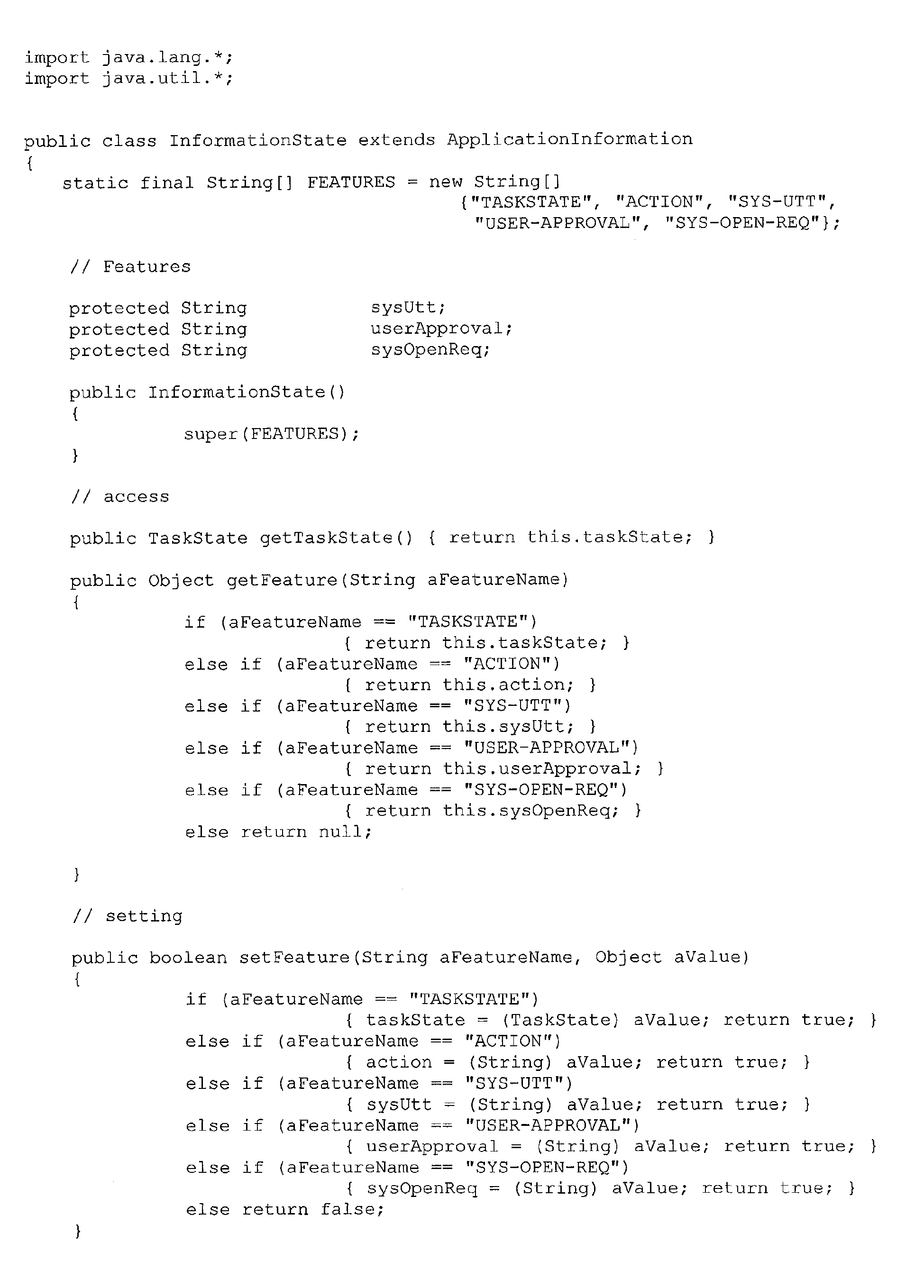

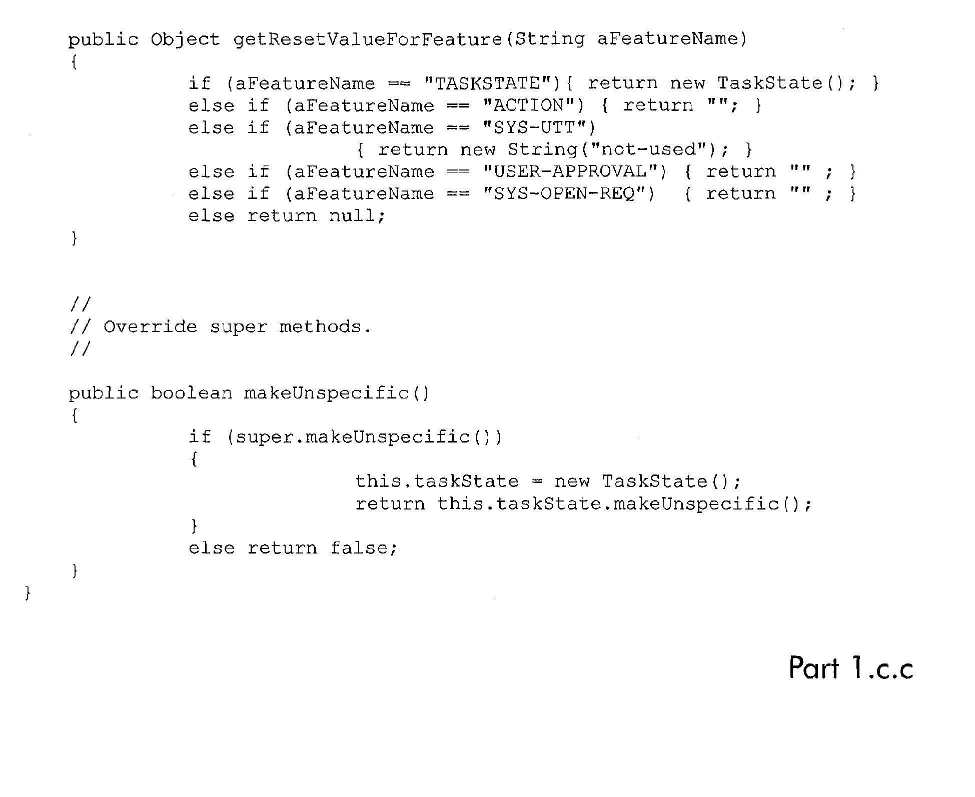

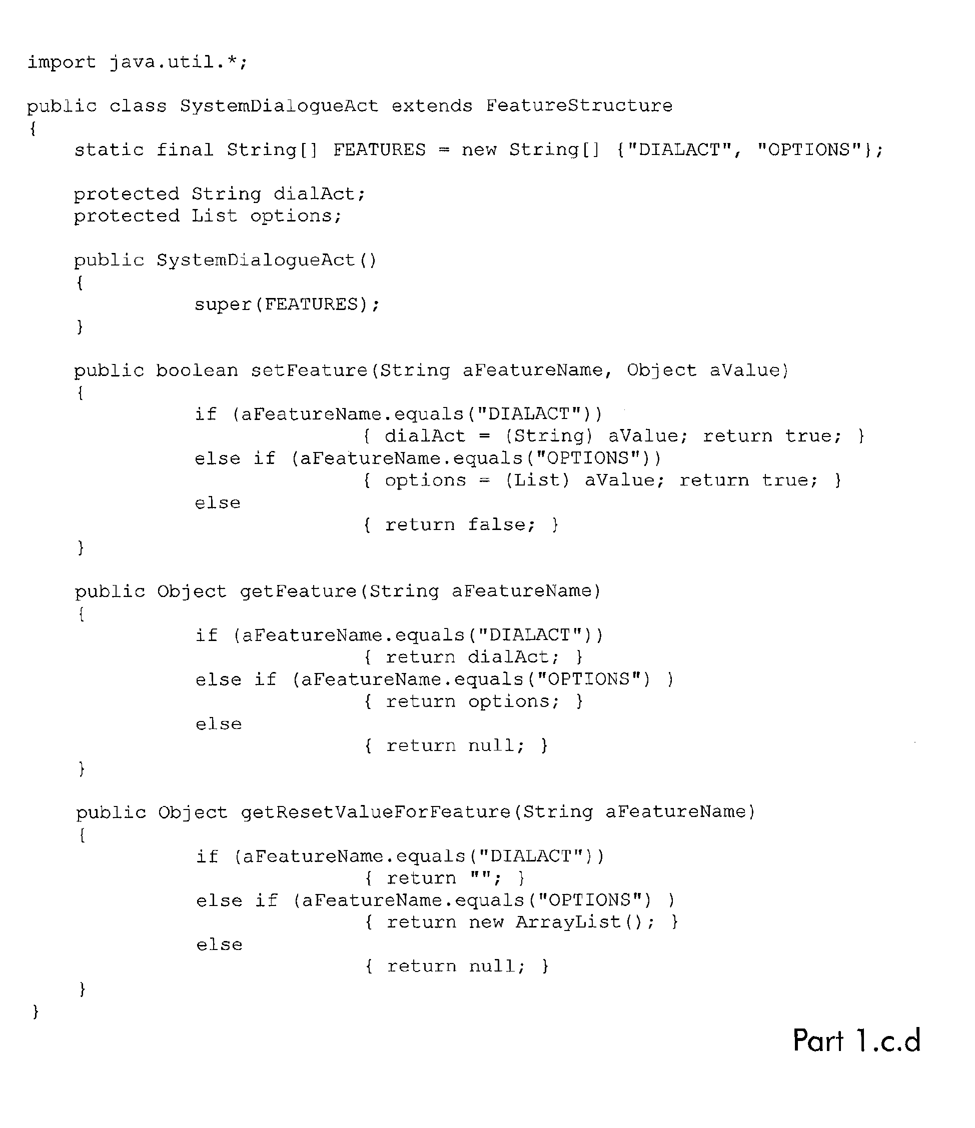

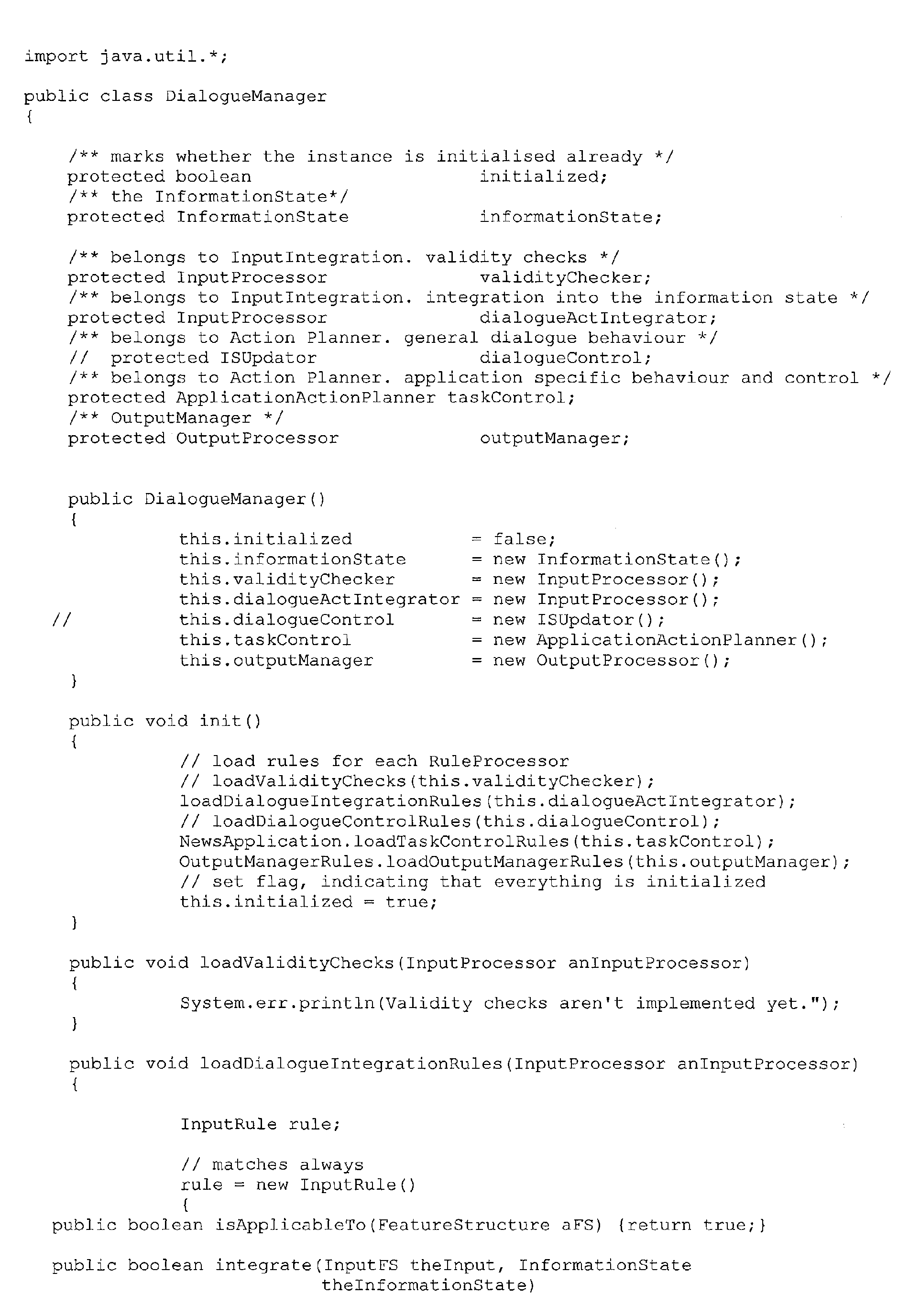

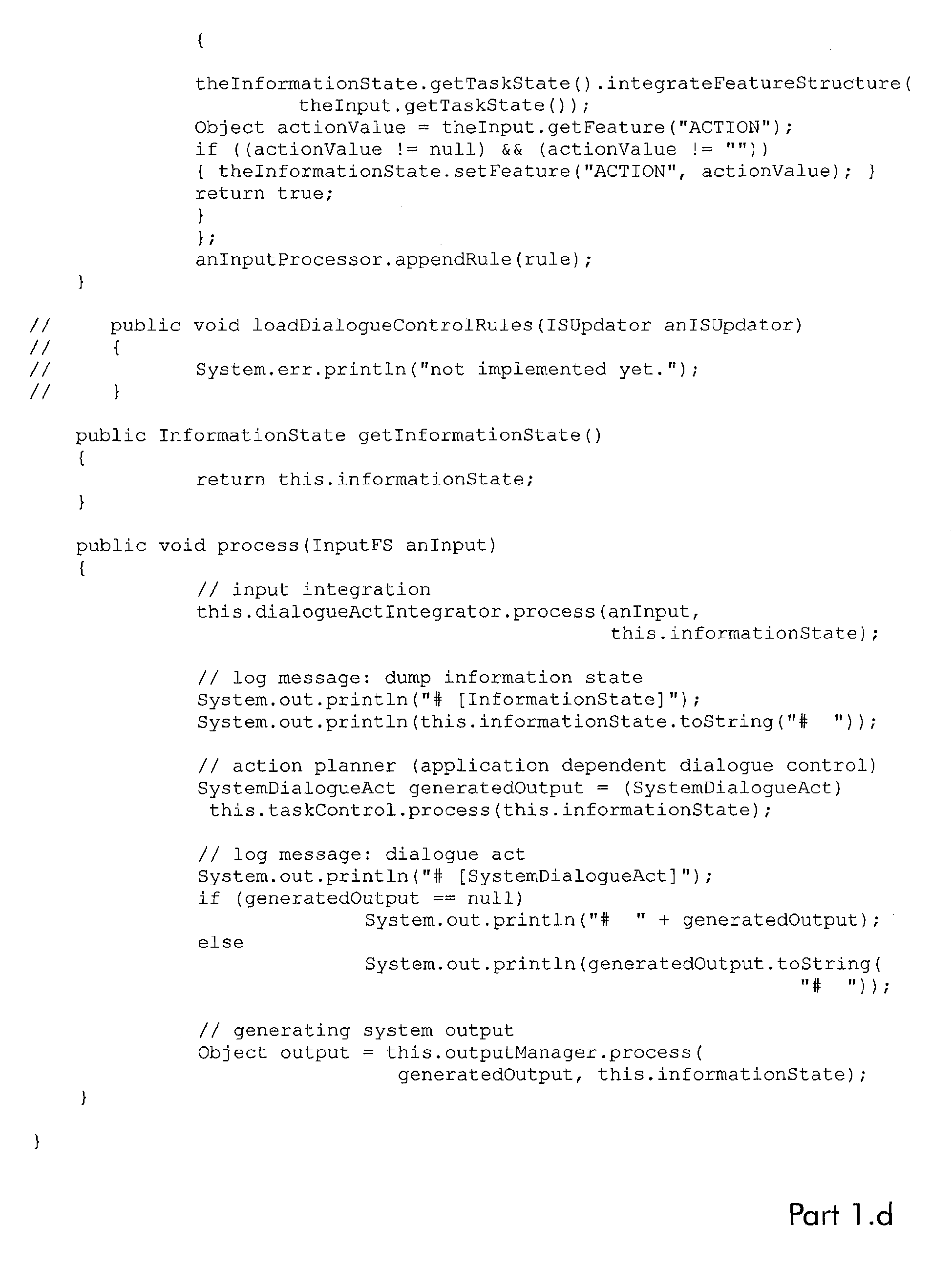

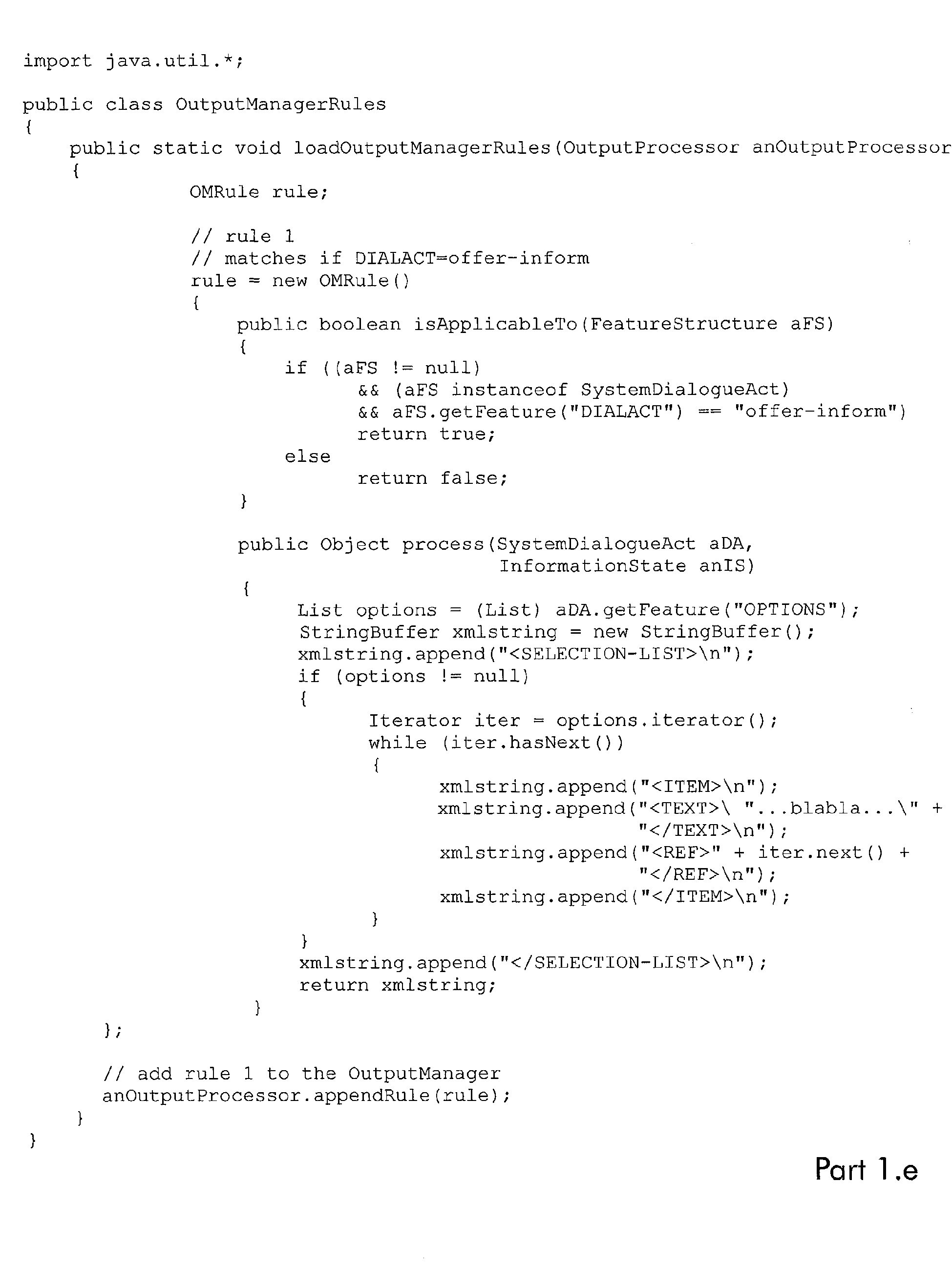

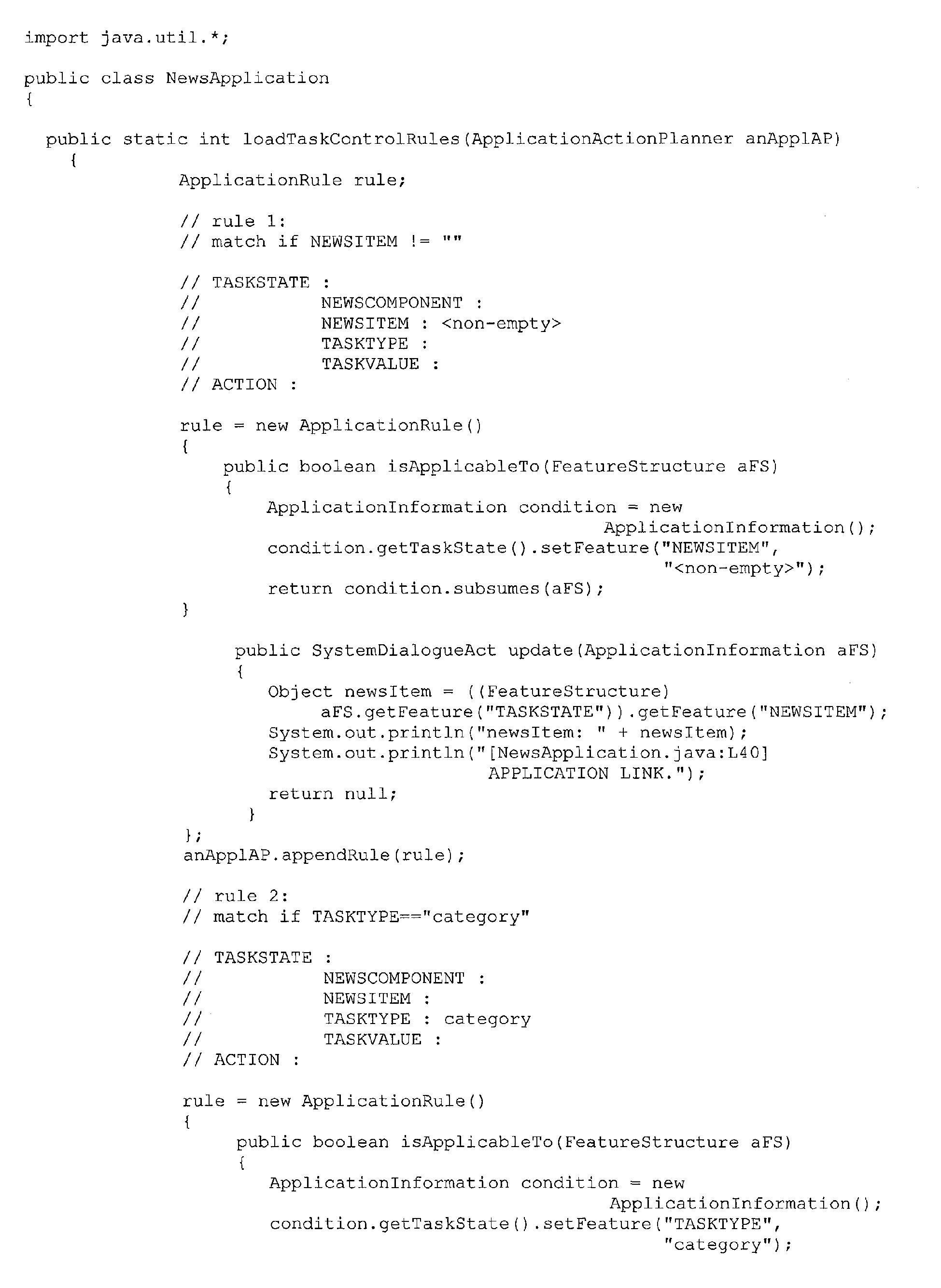

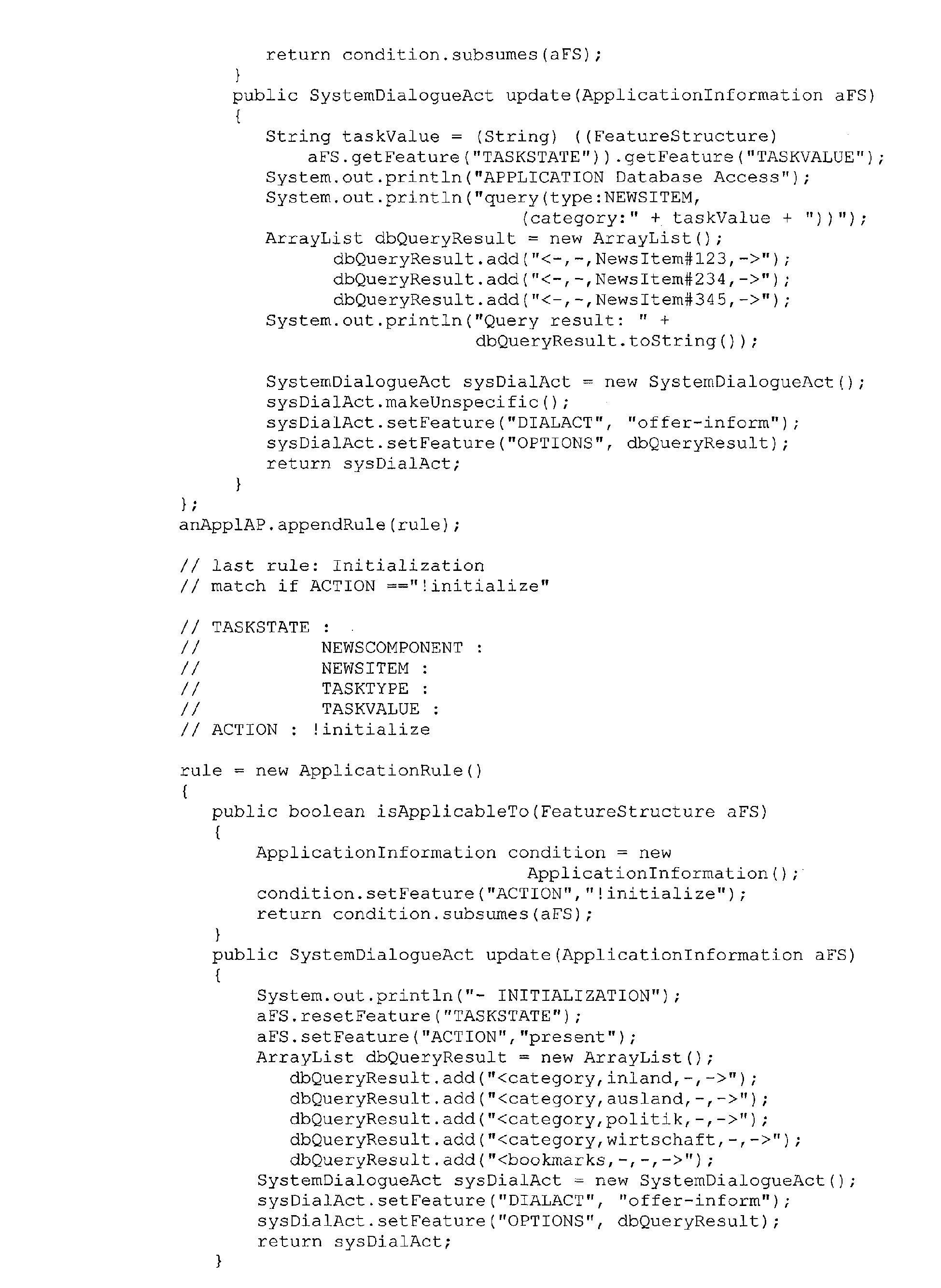

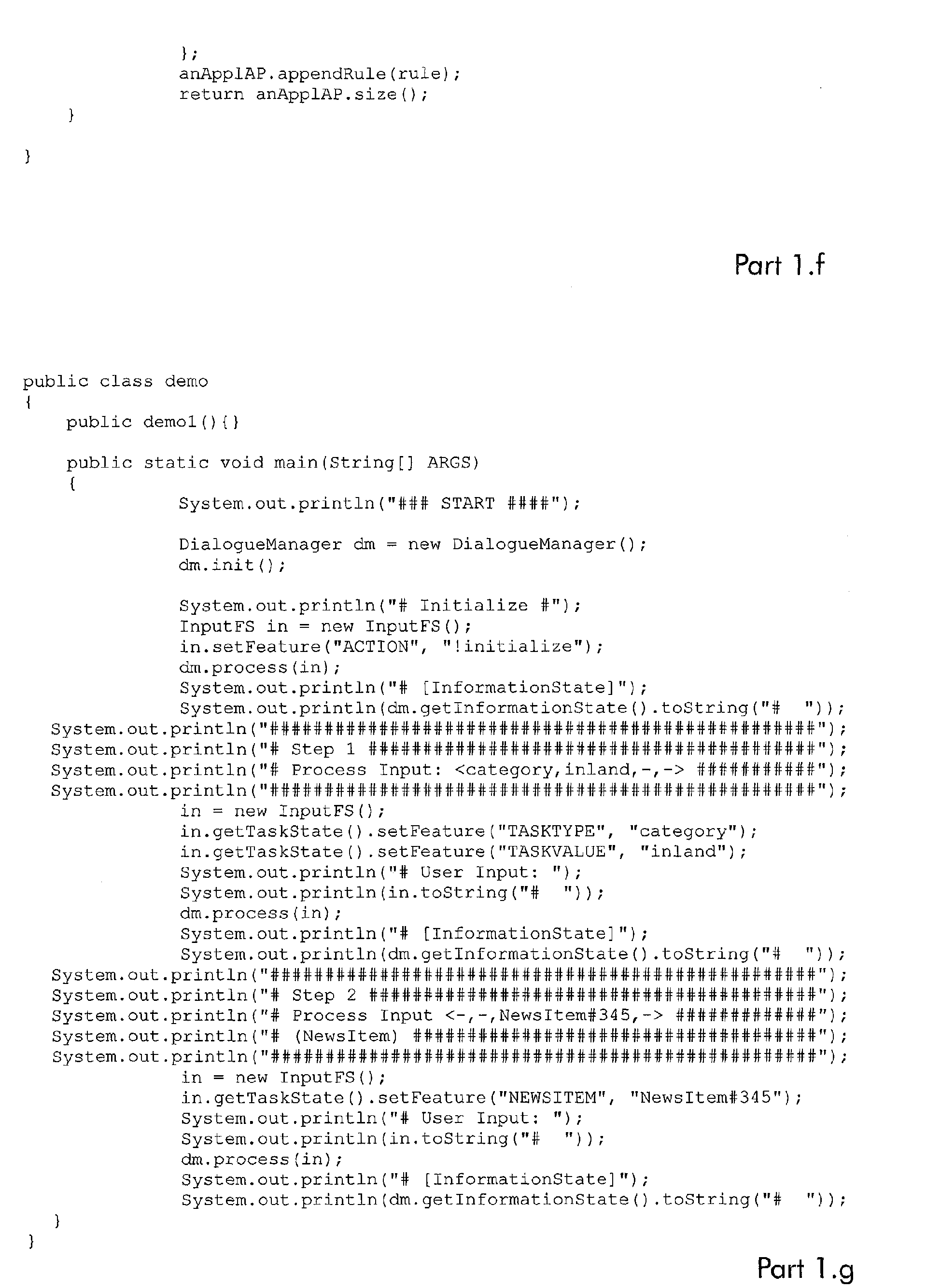

## Claims

1. A method for handling a multi-modal dialog on a device comprising the steps of
- providing a description of a multi-modal dialog;
- exploring modality capabilities of the device to identify available modalities;
- establishing a modality binding between the available modalities and the multi-modal dialog;
- processing interactively dialog parts of the multi-modal dialog according to the modality binding and the description of the multimodal dialog;
**characterized by** comprising the further steps of
- creating and maintaining dynamically a dialog context reflecting used utterances and constraints from an application or usage context and the available modalities; and
- adapting dynamically the modality binding between the available modalities and the description of the multi-modal dialog according to the dialog context.

2. The method according to claim 1, **characterized in that** the dialog context is presented as feature structures for a task state, an information state, or a application information.

3. The method according to claim 1, **characterized in that** the dynamically adapting is performed according to rules of applications, inputs, or interfaces.

4. A device with an dialog interface **characterized by** comprising dialog control means for performing the method according to claim 1.

5. A dialog generation system comprising transmission means for generating and exchanging dialog descriptions of a multi-modal dialog,
**characterized by** comprising dialog control and generation means for controlling and generating the multi-modal dialog according to the method of claim 1.

6. A computer software product **characterized by** comprising dialog control means that are adapted to perform the method according to claim 1.

## Amended claims

### Amended claims in accordance with Rule 86(2) EPC.

**1.** A method for handling a multi-modal dialog on a device comprising the steps of
- providing a description of a multi-modal dialog;
- exploring modality capabilities of the device to identify available modalities;
- establishing a modality binding between the available modalities and the multi-modal dialog;
- processing interactively dialog parts of the multi-modal dialog according to the modality binding and the description of the multi-modal dialog;
**characterized by** comprising the further steps of
- creating and maintaining dynamically within a dialog a dialog context reflecting used utterances and constraints from an application or usage context and the available modalities; and
- adapting dynamically within a dialog context-sensitve the modality binding between the available modalities and the description of the multi-modal dialog according to the dialog context.

**2.** The method according to claim 1, **characterized in that** the dialog context is presented as multiple feature structures for a task state, an information state, or a application information.

**3.** The method according to claim 1, **characterized in that** the dynamically adapting is performed according to rules of applications, inputs, or interfaces.

**4.** A device with a dialog interfacecomprising dialog control means for
- providing a description of a multi-modal dialog;
- exploring modality capabilities of the device to identify available modalities;
- establishing a modality binding between the available modalities and the multi-modal dialog;
- processing interactively dialog parts of the multi-modal dialog according to the modality binding and the description of the multi-modal dialog;
**characterized in that** the control means is adapted to
- create and maintain dynamically within a dialog a dialog context reflecting used utterances and constraints from an application or usage context and the available modolities; and
- adapt dynamically within a dialog context-sensitve the modality binding between the available modalities and the description of the multi-modal dialog according to the dialog context.
A dialog generation system comprising transmission means for generating and exchanging dialog descriptions of a multi-modal dialog, the dialog generation system comprising dialog control and generation means for controlling and generating the multi-modal dialog where the multi-modal dialog is a description enabling the controlling means;
- exploring modality capabilities of the device to identify available modalities;
- establishing a modality binding between the available modalities and the multi-modal dialog;
- processing interactively dialog parts of the multi-modal dialog according to the modality binding and the description of the multi-modal dialog;
**characterized in that** the control means is adapted to
- create and maintain dynamically within a dialog a dialog context reflecting used utterances and constraints from an application or usage context and the available modalities; and
- adapt dynamically within a dialog context-sensitve the modality binding between the available modalities and the description of the multi-modal dialog according to the dialog context.
A computer software product comprising dialog control means for
- providing a description of a multi-modal dialog;
- exploring modality capabilities of the device to identify available modalities;
- establishing a modality binding between the available modalities and the multi-modal dialog;
- processing interactively dialog parts of the multi-modal dialog according to the modality binding and the description of the multi-modal dialog;
**characterized in that** the control means is adapted to
- create and maintain dynamically within a dialog a dialog context reflecting used utterances and constraints from an application or usage context and the available modalities; and
- adapt dynamically within a dialog context-sensitve the modality binding between the available modalities and the description of the multi-modal dialog according to the dialog context.
